(19) Europäisches Patentamt / European Patent Office / Office européen des brevets

(11) **EP 3 860 091 B1**

(12) **EUROPEAN PATENT SPECIFICATION**

(45) Date of publication and mention
of the grant of the patent:
**27.03.2024   Bulletin 2024/13**

(21) Application number: **19872321.5**

(22) Date of filing: **24.09.2019**

(51) International Patent Classification (IPC):
**H04L 5/00** *(2006.01)*

(52) Cooperative Patent Classification (CPC):
**H04B 7/0689; H04B 7/0456; H04L 5/005;
H04L 5/0053;** H04B 7/024; H04L 5/0023;
H04L 5/0048

(86) International application number:
**PCT/CN2019/107527**

(87) International publication number:
**WO 2020/078173 (23.04.2020 Gazette 2020/17)**

(54) **INFORMATION RECEIVING METHOD AND DEVICE AND INFORMATION SENDING METHOD AND DEVICE**

VERFAHREN UND VORRICHTUNG ZUM EMPFANGEN VON INFORMATIONEN SOWIE
VERFAHREN UND VORRICHTUNG ZUM SENDEN VON INFORMATIONEN

PROCÉDÉ ET DISPOSITIF DE RÉCEPTION D'INFORMATIONS ET PROCÉDÉ ET DISPOSITIF
D'ENVOI D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **18.10.2018   CN 201811216839**

(43) Date of publication of application:
**04.08.2021   Bulletin 2021/31**

(73) Proprietor: **Huawei Technologies Co., Ltd.
Shenzhen, Guangdong 518129 (CN)**

(72) Inventors:
 • **LIU, Xianda
   Shenzhen, Guangdong 518129 (CN)**
 • **ZHANG, Di
   Shenzhen, Guangdong 518129 (CN)**
 • **LIU, Kunpeng
   Shenzhen, Guangdong 518129 (CN)**

(74) Representative: **Epping - Hermann - Fischer
Patentanwaltsgesellschaft mbH
Schloßschmidstraße 5
80639 München (DE)**

(56) References cited:
**US-A1- 2018 048 366**

• **QUALCOMM INCORPORATED: "Details of CSI
Measurement", 3GPP DRAFT; R1-1716394, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , vol. RAN WG1, no. Nagoya,
Japan; 20170918 - 20170921 12 September 2017
(2017-09-12), XP051329983, Retrieved from the
Internet:
URL:http://www.3gpp.org/ftp/tsg_ran/WG1_RL
1/TSGR1_AH/NR_AH_1709/Docs/ [retrieved on
2017-09-12]**
• **ZTE: "Non-Codebook based and Hybrid based UL
transmission", 3GPP DRAFT; R1-1710177
NON-CODEBOOK BASED AND HYBRID BASED
UL TRANSMISSION, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS CED ,
vol. RAN WG1, no. Qingdao, P.R. China; 20170627
- 20170630 26 June 2017 (2017-06-26),
XP051299401, Retrieved from the Internet:
URL:http://www.3gpp.org/ftp/Meetings_3GPP_
SYNC/RAN1/Docs/ [retrieved on 2017-06-26]**

**Description**

**TECHNICAL FIELD**

This application relates to the field of communications technologies, and in particular, to an information receiving method and apparatus, and an information sending method and apparatus.

**BACKGROUND**

Generally, when a terminal can directly derive uplink channel information from downlink channel information, or when a network device can directly derive downlink channel information from uplink channel information, it may be considered that a communications system has a feature of channel reciprocity. The communications system may be, for example, a time division duplex (time division duplexing, TDD) system.

In the current technology, based on the feature of channel reciprocity, when scheduling uplink data, a network device may not indicate a precoding scheme to a terminal, that is, non-codebook-based transmission of the uplink data may be implemented. In a non-codebook-based transmission process, the network device may send CSI-RSs to the terminal on channel state information reference signal (channel state information reference signal, CSI-RS) resources. The terminal may obtain downlink channel information based on the CSI-RSs, and select, based on the downlink channel information, precoding schemes based on which SRSs are sent on sounding reference signal (sounding reference signal, SRS) resources that are in a one-to-one correspondence with the CSI-RS resources.

However, in the current technology, transmission performance is relatively low. From US 2018/048366 A1 systems and methods for dynamic uplink antenna port management are known.

**SUMMARY**

This application provides an information receiving method and apparatus, and an information sending method and apparatus, to resolve a problem in the current technology that transmission performance is relatively low. According to a first aspect, an embodiment of this application provides an information receiving method, applied to a network device. The method includes:

sending configuration information used to indicate a target SRS resource, where the target SRS resource is associated with K CSI-RS resources, K is an integer greater than 1, the K CSI-RS resources are used to determine a precoding scheme used for an SRS carried on the target SRS resource; and receiving the SRS carried on the target SRS resource.

In the foregoing solution, the network device sends the configuration information used to indicate the target SRS resource, where the target SRS resource is associated with the K CSI-RS resources, K is an integer greater than 1, and the K CSI-RS resources are used by a terminal to determine the precoding scheme used for the SRS carried on the target SRS resource. In this way, the terminal comprehensively considers mutual influence of CSI-RSs carried on a plurality of CSI-RS resources, to determine the precoding scheme used for the SRS carried on the target SRS resource, so that a precoding scheme that enables better transmission performance can be selected, to improve transmission performance.

In a possible implementation, the precoding scheme used for the SRS carried on the target SRS resource is determined in a determining manner 1 or a determining manner 2. The determining manner 1 is as follows: The precoding scheme used for the SRS carried on the target SRS resource is determined based on channel measurement information represented by a CSI-RS carried on a first target resource and interference information represented by a CSI-RS carried on a second target resource. The first target resource is one of the K CSI-RS resources, and the second target resource is all CSI-RS resources in the K CSI-RS resources other than the first target resource. The determining manner 2 is as follows: The precoding scheme used for the SRS carried on the target SRS resource is determined based on channel measurement information represented by a CSI-RS carried on a third target resource. The third target resource is one of the K CSI-RS resources.

In the foregoing solution, a precoding scheme for an SRS sent to a plurality of network devices based on the target SRS resource may be determined in the determining manner 1, and a precoding scheme for an SRS sent to a single network device based on the target SRS resource may be determined in the determining manner 2.

In a possible implementation, the target SRS resource includes a plurality of SRS resources. Herein, the target SRS resource includes the plurality of SRS resources, so that each of the plurality of SRS resources can be associated with the same K CSI-RS resources. It should be noted that when the target SRS resource includes the plurality of SRS resources, the precoding scheme is determined in the determining manner 1 for all the plurality of SRS resources, or the precoding scheme is determined in the determining manner 2 for all the plurality of SRS resources.

In a possible implementation, the configuration information is further used to indicate K transmission parameters corresponding to the target SRS resource, and the SRS carried on the target SRS resource is sent based on one target transmission parameter in the K transmission parameters.

In the foregoing solution, the target SRS resource corresponds to the K transmission parameters. Therefore, after determining a precoding scheme of an SRS, the terminal may determine, in the K transmission parameters, a transmission parameter matching the precoding scheme (where the transmission parameter matching the precoding scheme may be understood as a transmission parameter that can ensure SRS transmission performance), to perform SRS sending. In this way, the SRS transmission performance is ensured.

In a possible implementation, the K transmission parameters are in a one-to-one correspondence with the K CSI-RS resources.

In the foregoing solution, the K transmission parameters are in the one-to-one correspondence with the K CSI-RS resources. Therefore, after determining a precoding scheme of an SRS based on the K CSI-RS resources, the terminal may use a transmission parameter corresponding to a CSI-RS resource corresponding to the precoding scheme as a transmission parameter matching the precoding scheme, to perform SRS sending. In this way, the SRS transmission performance is ensured.

In a possible implementation, the target transmission parameter is a transmission parameter corresponding to a target resource in the K CSI-RS resources, where the target resource carries a CSI-RS that represents channel measurement information.

In a possible implementation, the method further includes:
sending K pieces of DCI that are in a one-to-one correspondence with the K CSI-RS resources, where the K pieces of DCI are used to indicate to trigger the terminal to send the SRS on the target SRS resource.

In the foregoing solution, the K pieces of DCI are sent, so that the terminal is triggered to send the SRS on the target SRS resource that is aperiodic in time domain.

In a possible implementation, the K pieces of DCI are further used to indicate to trigger the terminal to receive CSI-RSs on the corresponding CSI-RS resources.

In a possible implementation, the K pieces of DCI are carried in a same time unit. In addition, the precoding scheme used for the SRS carried on the target SRS resource is determined based on the foregoing determining manner 1. Herein, based on the foregoing determining manner 1, when the K pieces of DCI are carried in a same time unit, the precoding scheme used for the SRS carried on the target SRS resource that is aperiodic in time domain can be determined.

In a possible implementation, the K pieces of DCI are carried in different time units. In addition, the precoding scheme used for the SRS carried on the target SRS resource is determined based on the foregoing determining manner 2.

Herein, based on the foregoing determining manner 2, when the K pieces of DCI are carried in different time units, the precoding scheme used for the SRS carried on the target SRS resource that is aperiodic in time domain can be determined.

In a possible implementation, the configuration information is specifically used to indicate an SRS resource set including N SRS resources, where the N SRS resources include the target SRS resource, the N SRS resources are associated with M CSI-RS resources, and the M CSI-RS resources include the K CSI-RS resources. N is a positive integer, and M is a positive integer less than or equal to K.

In the foregoing solution, the target SRS resource belongs to the SRS resource set, so that the network device can manage, in a set, the target SRS resource. This improves flexibility of managing the target SRS resource and reduces complexity of indicating by using the configuration information.

In a possible implementation, K is equal to M, and each SRS resource in the SRS resource set is associated with the K CSI-RS resources.

According to a second aspect, an embodiment of this application provides an information sending method, applied to a terminal. The method includes:
receiving configuration information used to indicate a target SRS resource, where the target SRS resource is associated with K channel state information reference signal CSI-RS resources, K is an integer greater than 1, and the K CSI-RS resources are used by the terminal to determine a precoding scheme used for an SRS carried on the target SRS resource; determining, based on CSI-RSs separately carried on the K CSI-RS resources, the precoding scheme used for the SRS carried on the target SRS resource; and sending the SRS on the target SRS resource based on the determined precoding scheme.

In the foregoing solution, the configuration information used to indicate the target SRS resource is received, where the target SRS resource is associated with the K CSI-RS resources, and K is an integer greater than 1; the precoding scheme used for the SRS carried on the target SRS resource is determined based on the K CSI-RS resources; and the SRS is sent on the target SRS resource based on the determined precoding scheme. In this way, the terminal comprehensively considers mutual influence of CSI-RSs carried on a plurality of CSI-RS resources, to determine the precoding scheme used for the SRS carried on the target SRS resource, so that a precoding scheme that enables better transmission performance can be selected, to improve transmission performance.

In a possible implementation, the precoding scheme that is used for the SRS carried on the target SRS resource that is determined based on the CSI-RSs separately carried on the K CSI-RS resources are determined in a determining manner 1 or a determining manner 2. The determining manner 1 is as follows: The precoding scheme used for the SRS carried on the target SRS resource is determined based on channel measurement information represented by a CSI-RS carried on a first target resource and interference information represented by a CSI-RS carried on a second target resource. The first target resource is one of the K CSI-RS resources, and the second target resource is all CSI-RS resources in the K CSI-RS resources other than the first target resource. The determining manner 2 is as follows: The precoding scheme used for the SRS carried on the target SRS resource is determined based on channel measurement information represented by a CSI-RS carried on a third target resource. The third target resource is one of the K CSI-RS resources.

In a possible implementation, the target SRS resource includes a plurality of SRS resources.

In a possible implementation, the configuration information is further used to indicate K transmission parameters corresponding to the target SRS resource.

Correspondingly, the sending the SRS on the target SRS resource based on the determined precoding scheme includes: sending the SRS on the target SRS resource based on the determined precoding scheme and one target transmission parameter in the K transmission parameters.

In a possible implementation, the K transmission parameters are in a one-to-one correspondence with the K CSI-RS resources.

In a possible implementation, the target transmission parameter is a transmission parameter corresponding to a target resource in the K CSI-RS resources, where the target resource carries a CSI-RS that represents channel measurement information.

In a possible implementation, before the SRS is sent on the target SRS resource, the method further includes: receiving K pieces of DCI that are in a one-to-one correspondence with the K CSI-RS resources, where the K pieces of DCI are used to indicate to trigger the terminal to send the SRS on the target SRS resource.

In a possible implementation, the K pieces of DCI are further used to indicate to trigger the terminal to receive CSI-RSs on the corresponding CSI-RS resources.

In a possible implementation, the K pieces of DCI are carried in a same time unit. In addition, the precoding scheme used for the SRS carried on the target SRS resource is determined based on the foregoing determining manner 1.

In a possible implementation, the K pieces of DCI are carried in different time units. In addition, the precoding scheme used for the SRS carried on the target SRS resource is determined based on the foregoing determining manner 2.

In a possible implementation, the configuration information is specifically used to indicate an SRS resource set including N SRS resources, where the N SRS resources include the target SRS resource, the N SRS resources are associated with M CSI-RS resources, and the M CSI-RS resources include the K CSI-RS resources. N is a positive integer, and M is a positive integer less than or equal to K.

In a possible implementation, K is equal to M, and each SRS resource in the SRS resource set is associated with the K CSI-RS resources.

According to a third aspect, an embodiment of this application provides an information receiving apparatus, applied to a network device. The apparatus includes a sending module and a receiving module. The sending module is configured to send configuration information used to indicate a target SRS resource, where the target SRS resource is associated with K channel state information reference signal CSI-RS resources, K is an integer greater than 1, and the K CSI-RS resources are used to determine a precoding scheme used for an SRS carried on the target SRS resource. The receiving module is configured to receive the SRS carried on the target SRS resource.

In a possible implementation, the precoding scheme used for the SRS carried on the target SRS resource is determined in a determining manner 1 or a determining manner 2. The determining manner 1 is as follows: The precoding scheme used for the SRS carried on the target SRS resource is determined based on channel measurement information represented by a CSI-RS carried on a first target resource and interference information represented by a CSI-RS carried on a second target resource. The first target resource is one of the K CSI-RS resources, and the second target resource is all CSI-RS resources in the K CSI-RS resources other than the first target resource. The determining manner 2 is as follows: The precoding scheme used for the SRS carried on the target SRS resource is determined based on channel measurement information represented by a CSI-RS carried on a third target resource. The third target resource is one of the K CSI-RS resources.

In a possible implementation, the target SRS resource includes a plurality of SRS resources.

In a possible implementation, the configuration information is further used to indicate K transmission parameters corresponding to the target SRS resource, and the SRS carried on the target SRS resource is sent based on one target transmission parameter in the K transmission parameters.

In a possible implementation, the K transmission parameters are in a one-to-one correspondence with the K CSI-RS resources.

In a possible implementation, the target transmission parameter is a transmission parameter corresponding to a target resource in the K CSI-RS resources, where the target resource carries a CSI-RS that represents channel measurement information.

In a possible implementation, the sending module is further configured to send K pieces of DCI that are in a one-to-one correspondence with the K CSI-RS resources, where the K pieces of DCI are used to indicate to trigger a terminal to send the SRS on the target SRS resource.

In a possible implementation, the K pieces of DCI are further used to indicate to trigger the terminal to receive CSI-RSs on the corresponding CSI-RS resources.

In a possible implementation, the K pieces of DCI are carried in a same time unit. In addition, the precoding scheme used for the SRS carried on the target SRS resource is determined based on the foregoing determining manner 1.

In a possible implementation, the K pieces of DCI are carried in different time units. In addition, the precoding scheme used for the SRS carried on the target SRS resource is determined based on the foregoing determining manner 2.

In a possible implementation, the configuration information is specifically used to indicate an SRS resource set including N SRS resources, where the N SRS resources include the target SRS resource, the N SRS resources are associated with M CSI-RS resources, and the M CSI-RS resources include the K CSI-RS resources. N is a positive integer, and M is a positive integer less than or equal to K.

In a possible implementation, K is equal to M, and each SRS resource in the SRS resource set is associated with the K CSI-RS resources.

According to a fourth aspect, an embodiment of this application provides an information sending apparatus, applied to a terminal. The apparatus includes a receiving module, a processing module, and a sending module. The receiving module is configured to receive configuration information used to indicate a target SRS resource, where the target SRS resource is associated with K channel state information reference signal CSI-RS resources, K is an integer greater than 1, and the K CSI-RS resources are used by the terminal to determine a precoding scheme used for an SRS carried on the target SRS resource. The processing module is configured to determine, based on CSI-RSs separately carried on the K CSI-RS resources, the precoding scheme used for the SRS carried on the target SRS resource. The sending module is configured to send the SRS on the target SRS resource based on the determined precoding scheme.

In a possible implementation, the precoding scheme that is used for the SRS carried on the target SRS resource that is determined based on the CSI-RSs separately carried on the K CSI-RS resources are determined in a determining manner 1 or a determining manner 2. The determining manner 1 is as follows: The precoding scheme used for the SRS carried on the target SRS resource is determined based on channel measurement information represented by a CSI-RS carried on a first target resource and interference information represented by a CSI-RS carried on a second target resource. The first target resource is one of the K CSI-RS resources, and the second target resource is all CSI-RS resources in the K CSI-RS resources other than the first target resource. The determining manner 2 is as follows: The precoding scheme used for the SRS carried on the target SRS resource is determined based on channel measurement information represented by a CSI-RS carried on a third target resource. The third target resource is one of the K CSI-RS resources.

In a possible implementation, the target SRS resource includes a plurality of SRS resources.

In a possible implementation, the configuration information is further used to indicate K transmission parameters corresponding to the target SRS resource. Correspondingly, the sending module is specifically configured to send the SRS on the target SRS resource based on the determined precoding scheme and one target transmission parameter in the K transmission parameters.

In a possible implementation, the K transmission parameters are in a one-to-one correspondence with the K CSI-RS resources.

In a possible implementation, the target transmission parameter is a transmission parameter corresponding to a target resource in the K CSI-RS resources, where the target resource carries a CSI-RS that represents channel measurement information.

In a possible implementation, the receiving module is further configured to receive K pieces of DCI that are in a one-to-one correspondence with the K CSI-RS resources, where the K pieces of DCI are used to indicate to trigger the terminal to send the SRS on the target SRS resource.

In a possible implementation, the K pieces of DCI are further used to indicate to trigger the terminal to receive CSI-RSs on the corresponding CSI-RS resources.

In a possible implementation, the K pieces of DCI are carried in a same time unit. In addition, the precoding scheme used for the SRS carried on the target SRS resource is determined based on the foregoing determining manner 1.

In a possible implementation, the K pieces of DCI are carried in different time units. In addition, the precoding scheme used for the SRS carried on the target SRS resource is determined based on the foregoing determining manner 2.

In a possible implementation, the configuration information is specifically used to indicate an SRS resource set including N SRS resources, where the N SRS resources include the target SRS resource, the N SRS resources are associated with M CSI-RS resources, and the M CSI-RS resources include the K CSI-RS resources. N is a positive integer, and M is a positive integer less than or equal to K.

In a possible implementation, K is equal to M, and each SRS resource in the SRS resource set is associated with the K CSI-RS resources.

According to a fifth aspect, an embodiment of the present invention provides a network device. The network device has a function of implementing actions of the network device in the foregoing method designs. The function may be implemented by hardware, or may be implemented by hardware by executing corresponding software. The hardware or software includes one or more modules corresponding to the function.

In a possible design, a structure of the network device includes a processor and a transceiver. The processor is configured to support the network device in performing a corresponding function in the foregoing method. The transceiver is configured to: support communication between the network device and a terminal, to send information in the foregoing method to the terminal, or to receive a signal in the foregoing method from the terminal. The network device may further include a memory. The memory is configured to: be coupled to the processor, and store a necessary program instruction and necessary data of the network device.

According to a sixth aspect, an embodiment of the present invention provides a terminal. The terminal has a function of implementing actions of the terminal in the foregoing method designs. The function may be implemented by hardware, or may be implemented by hardware by executing corresponding software. The hardware or software includes one or more modules corresponding to the function. The module may be software and/or hardware.

In a possible design, a structure of the terminal includes a transceiver and a processor. The transceiver is configured to: support the terminal in receiving configuration information sent by the foregoing network device, or support the terminal in sending an SRS to the network device. The processor determines, based on CSI-RSs separately carried on K CSI-RS resources, a precoding scheme used for an SRS carried on a target SRS resource.

According to a seventh aspect, an embodiment of this application provides an information receiving apparatus, including units, modules, or circuits that are configured to perform the method according to any one of the first aspect or the possible implementations of the first aspect. The information receiving apparatus may be a network device, or may be a module used in a network device, for example, a chip used in the network device.

According to an eighth aspect, an embodiment of this application provides an information sending apparatus, including units, modules, or circuits that are configured to perform the method according to any one of the second aspect or the possible implementations of the second aspect. The information sending apparatus may be a terminal, or may be a module used in a terminal, for example, a chip used in the terminal.

According to a ninth aspect, an embodiment of this application provides a computer-readable storage medium, configured to store a computer program or an instruction. When the computer program or the instruction is run on a computer, the computer is enabled to perform the method according to any design of the first aspect.

According to a tenth aspect, an embodiment of this application provides a computer-readable storage medium, configured to store a computer program or an instruction. When the computer program or the instruction is run on a computer, the computer is enabled to perform the method according to any design of the second aspect.

According to an eleventh aspect, an embodiment of this application provides a computer program product. When the computer program product runs on a computer, the computer is enabled to perform the method according to any design of the first aspect.

According to a twelfth aspect, an embodiment of this application provides a computer program product. When the computer program product runs on a computer, the computer is enabled to perform the method according to any design of the second aspect.

## BRIEF DESCRIPTION OF DRAWINGS

FIG. 1 is a schematic diagram of an application scenario according to an embodiment of this application;
FIG. 2A to FIG. 2C are schematic diagrams of non-codebook-based transmission in the current technology;
FIG. 3A and FIG. 3B are schematic diagrams of CoMP transmission in the current technology;
FIG. 4A and FIG. 4B are schematic diagrams of non-codebook-based transmission used when there are two network devices in the current technology;
FIG. 5A is a schematic diagram of an SRS resource configuration in the current technology;
FIG. 5B is a schematic diagram of sending an SRS based on the SRS resource configuration in FIG. 5A in the current technology;
FIG. 6 is a schematic flowchart of an information receiving method and an information sending method according to an embodiment of this application;
FIG. 7A and FIG. 7B are schematic diagrams of SRS resource configurations according to an embodiment of this application;
FIG. 8A and FIG. 8B are schematic diagrams of precoding scheme determining manners according to an embodiment of this application;
FIG. 9 is a schematic structural diagram of an information receiving apparatus according to an embodiment of this application;

FIG. 10 is a schematic structural diagram of an information sending apparatus according to an embodiment of this application;

FIG. 11 is a schematic structural diagram of an information receiving apparatus according to an embodiment of this application; and

FIG. 12 is a schematic structural diagram of an information sending apparatus according to an embodiment of this application.

## DESCRIPTION OF EMBODIMENTS

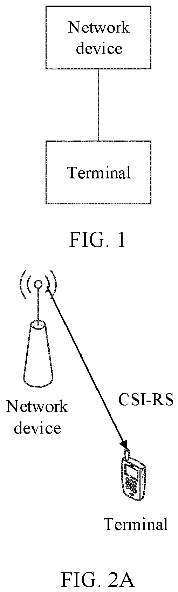

FIG. 1 is a schematic diagram of an application scenario according to an embodiment of this application. As shown in FIG. 1, a network device and a terminal may be included in the application scenario in this embodiment. When scheduling uplink data, the network device may not indicate a precoding scheme to the terminal. In other words, non-codebook-based transmission of the uplink data may be performed between the network device and the terminal. The network device may configure a target SRS resource for the terminal. The target SRS resource may be associated with a plurality of CSI-RS resources, and the plurality of CSI-RS resources are used by the terminal to determine a precoding scheme used for an SRS carried on the target SRS resource.

Optionally, the precoding scheme may be indicated by using a precoding matrix.

Optionally, there may be one network device, and all of the plurality of CSI-RS resources correspond to the network device. In other words, all CSI-RSs on the plurality of CSI-RS resources are sent by the network device. In addition, the network device includes a plurality of antenna groups, and different CSI-RS resources may correspond to different antenna groups.

Optionally, there may be a plurality of (that is, more than one) network devices, and the plurality of CSI-RS resources may correspond to the plurality of network devices. In other words, a CSI-RS on one CSI-RS resource is sent by a network device corresponding to the CSI-RS resource. Further, optionally, different CSI-RS resources may correspond to different network devices.

When there are a plurality of network devices, all the network devices may be used as a coordinating cluster. The terminal may communicate with the network devices in the coordinating cluster, and information may be exchanged between the network devices in the coordinating cluster. This transmission mode is referred to as a coordinated multipoint transmission/reception (coordinated multipoints transmission/reception, CoMP).

The network device may include a base station or a transmission reception point (transmission reception point, TRP). The base station may be an evolved NodeB (evolved NodeB, eNB) in a long term evolution (long term evolution, LTE) system, a base station which can be referred to as a 5G NodeB (gNodeB, gNB) in a fifth-generation (5G) mobile communications system (also referred to as new radio (new radio, NR)), a relay station, a vehicle-mounted device, a wearable device, an access network device in a future 5G network, an access network device in a future evolved public land mobile network (public land mobile network, PLMN), or the like. This is not limited in this application.

The terminal may also be referred to as user equipment, and may include but is not limited to a customer premise equipment (customer premise equipment, CPE), a smartphone (such as an Android mobile phone or an iOS mobile phone), a multimedia device, a streaming media device, a personal computer, a tablet, a palmtop, and a mobile internet device (mobile internet devices, MID), or an internet device such as a wearable intelligent device or a vehicle-mounted device.

A principle of not indicating a precoding scheme to the terminal when the network device schedules uplink data is explained as follows:

Step 1: The network device may configure SRS resources and CSI-RS resources associated with the SRS resources for the terminal.

Step 2: As shown in FIG. 2A, the network device sends CSI-RSs on time-frequency resources of the CSI-RS resources associated with the SRS resources. The terminal receives the CSI-RSs on the corresponding time-frequency resources, and determines a precoding scheme based on a channel reciprocity assumption and the received CSI-RSs.

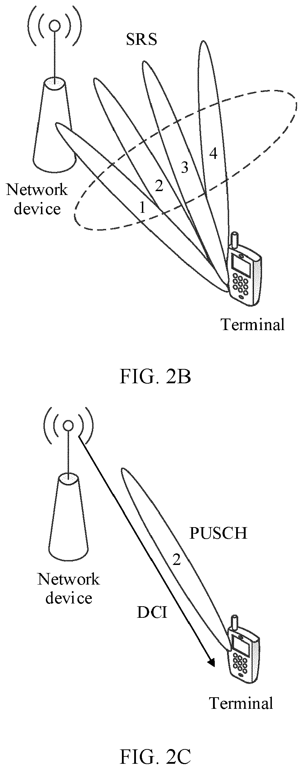

Step 3: It is assumed that there are four precoding schemes determined by the terminal. As shown in FIG. 2B, the terminal sends, on the SRS resources associated with the CSI-RS resources and based on the determined precoding schemes, SRSs through antenna beams (for example, antenna beams 1, 2, 3, and 4) in four different directions. The network device receives and measures the SRSs on the SRS resources to obtain uplink channel information. The quantity of precoding schemes may be determined based on an indication of the base station.

Step 4: The network device may determine, based on the SRSs in the four different antenna beam directions, a time-frequency resource and a sending solution that are used to schedule the terminal to send a physical uplink shared channel (physical uplink shared channel, PUSCH), and as shown in FIG. 2C, indicate the time-frequency resource and sending solution information to the terminal through downlink control information (downlink control information, DCI) carried on a physical downlink control channel (physical downlink control channel, PDCCH). The sending solution may include beam information used by the terminal to send the PUSCH, an SRS resource selection indication (SRS resource Indicator, SRI), a modulation and coding scheme (modulation and coding scheme, MCS), antenna port indication information, and the like. The SRIs are in a one-to-one correspondence with the precoding schemes. The SRI included in the sending solution is used to indicate, to the terminal, an antenna beam (for example, the antenna beam 2) that needs to be used for sending the PUSCH.

Step 5: After receiving the DCI, the terminal sends the PUSCH based on a precoding scheme corresponding to the SRI indicator.

It can be learned that in step 1 to step 5, the precoding scheme that needs to be used is not directly indicated between the network device and the terminal. Therefore, this is non-codebook-based transmission. It should be noted that, in this embodiment of this application, step 1 to step 3 in step 1 to step 5 may be mainly targeted for.

Based on an information exchange latency between the network devices, the CoMP transmission can be classified into ideal backhaul and non-ideal backhaul.

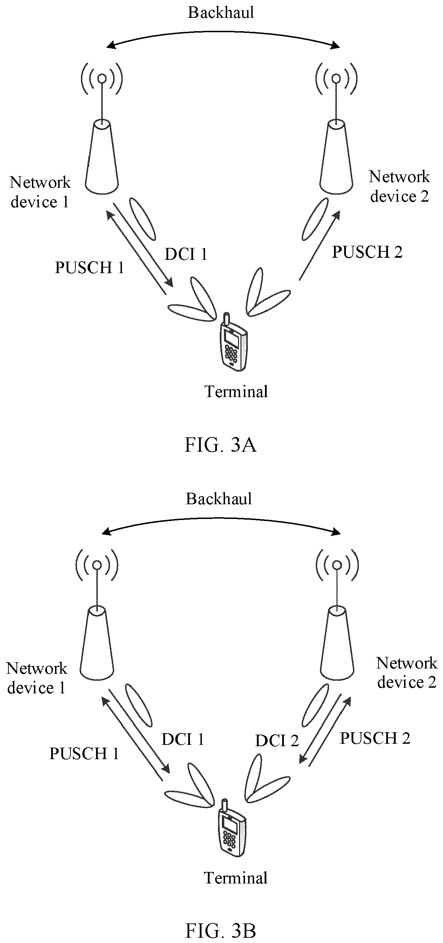

In an ideal backhaul scenario, an exchange latency between network devices is negligible. In this case, it may be considered that there is a serving network device (for example, a serving transmission reception point (serving TRP)/serving cell (serving cell)) in the network devices in the coordinating cluster. A function of the serving network device is to make a scheduling decision for data communication of the terminal, and perform medium access control (medium access control, MAC) layer communication and physical layer communication with the terminal. For example, the serving network device determines, based on the scheduling decision, time-frequency resources of a control channel (for example, a PDCCH) and a data channel (for example, a PUSCH/PDSCH) of the terminal, sends DCI signaling on the PDCCH, and sends data on the PUSCH/PDSCH. In addition to the serving network device, a remaining network device in the coordinating cluster is referred to as a coordinated network device (for example, a coordinated transmission reception point (coordinate TRP)/coordinated cell (coordinate TRP)). A function of the coordinated network device is to perform physical layer communication with the terminal based on the scheduling decision of the serving network device. For example, based on the scheduling decision of the serving network device, the coordinated network device sends DCI signaling on a PDCCH, and receives/sends data on a PUSCH/PDSCH. It can be learned that in the ideal backhaul scenario, one piece of DCI used for uplink scheduling can be supported. For example, there are two network devices in the coordinating cluster. As shown in FIG. 3 A, all configuration information and scheduling information that are used by the terminal to send a PUSCH 1 to a network device 1 and that are used by the terminal to send a PUSCH 2 to a network device 2 are included in DCI 1.

In a non-ideal backhaul scenario, because a latency between network devices is relatively high, an exchange latency between the network devices may be 2 milliseconds (ms) to 5 ms, or may even reach 50 ms. In this case, similar to the ideal backhaul scenario, if a framework in which the serving network device in the coordinating cluster controls the coordinated network device is used, scheduling information becomes invalid due to the exchange latency, and performance of an entire system is affected. Therefore, in the non-ideal backhaul scenario, a mechanism in which each network device in the coordinating cluster independently schedules data and a reference signal (reference signal, RS) of the terminal is introduced. In addition, each network device needs to be supported in independently indicating DCI. When a plurality of network devices simultaneously schedule the terminal based on respective scheduling decisions, the terminal simultaneously receives a plurality of pieces of DCI, and may separately perform uplink transmission based on the plurality of pieces of DCI. For example, the quantity of the network devices is 2. As shown in FIG. 3B, all configuration information and scheduling information that are used by the terminal to send the PUSCH 1 to the network device 1 are included in the DCI 1; and all configuration information and scheduling information that are used by the terminal to send the PUSCH 2 to the network device 2 are included in DCI 2.

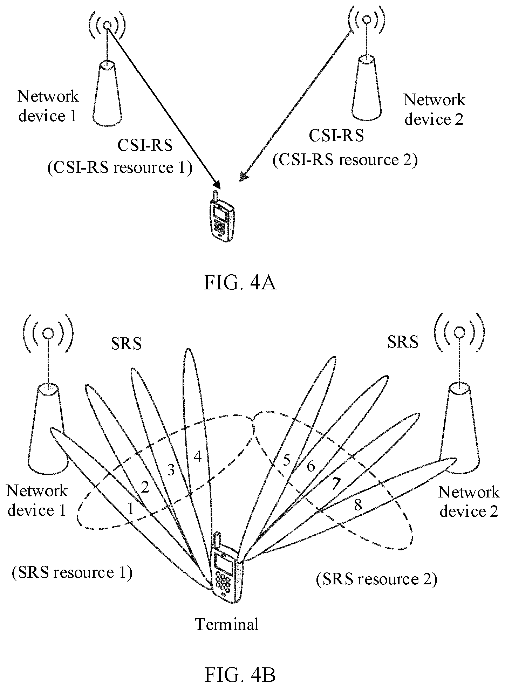

Currently, when the quantity of the network devices is 2, a CSI-RS resource 1 corresponds to the network device 1, and a CSI-RS resource 2 corresponds to the network device 2, step 2 and step 3 may be specifically shown in FIG. 4A and FIG. 4B. Specifically, first, as shown in FIG. 4A, the network device 1 sends a CSI-RS to the terminal on the CSI-RS resource 1, and the network device 2 sends a CSI-RS to the terminal on the CSI-RS resource 2. The terminal determines, based on the CSI-RS received on the CSI-RS resource 1, a precoding scheme used for sending an SRS on an SRS resource (which may be denoted as an SRS resource 1) associated with the CSI-RS resource 1, and determines, based on the CSI-RS received on the CSI-RS resource 2, a precoding scheme used for sending an SRS on an SRS resource (which may be denoted as an SRS resource 2) associated with the CSI-RS resource 2. Then, as shown in FIG. 4B, it is assumed that there are four precoding schemes determined by the terminal based on each measured CSI-RS. As shown in FIG. 4B, the terminal sends, on an SRS resource 1 based on a precoding scheme determined by using a measured CSI-RS resource 1, an SRS through antenna beams (for example, antenna beams 1, 2, 3, and 4) in four different directions, and the terminal sends, on an SRS resource 2 based on a precoding scheme determined by using a measured CSI-RS resource 2, an SRS through antenna beams (for example, antenna beams 5, 6, 7, and 8) in four different directions.

In addition, currently, in some special scenarios (for example, in the non-ideal backhaul scenario of the CoMP transmission), it may be specified that one SRS resource set (SRS resource set) is associated with one CSI-RS resource, and the SRS resource set includes a plurality of SRS resources.

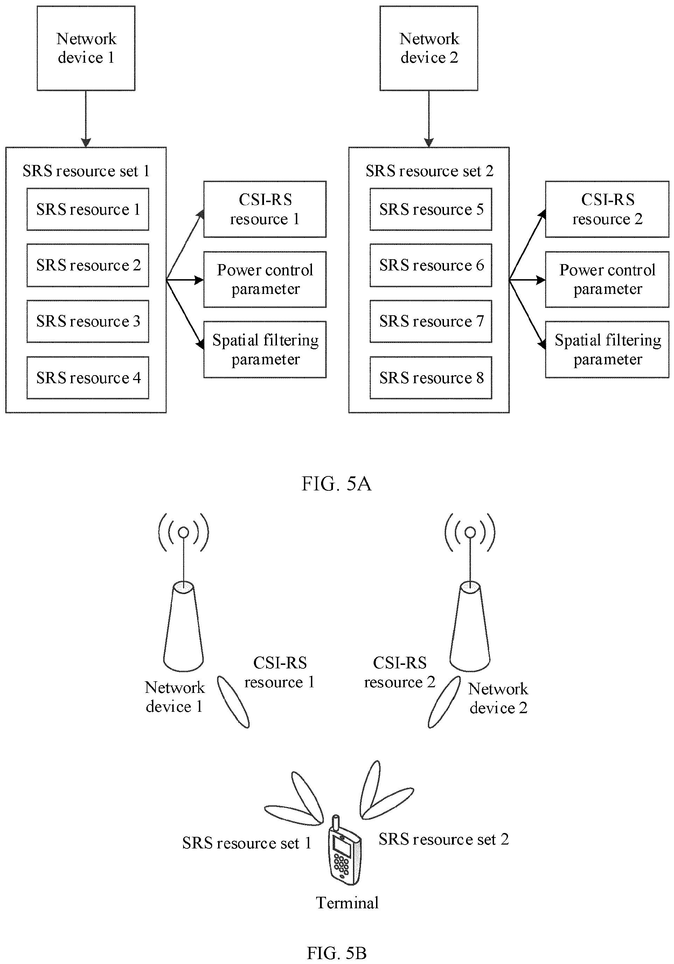

For example, it is assumed that there are two network devices, namely, the network device 1 and the network device 2, in the application scenario shown in FIG. 1. As shown in FIG. 5A, the network device 1 configures an SRS resource set 1, and the network device 2 configures an SRS resource set 2. The SRS resource set 1 may include an SRS resource 1 to an SRS resource 4. The SRS resource set 2 may include an SRS resource 5 to an SRS resource 7. In addition, as shown in FIG. 5A, the SRS resource set 1 is associated with the CSI-RS resource 1, and the SRS resources in the SRS resource set 1 correspond to a same power control parameter and a same spatial filtering parameter. The SRS resource set 2 is associated with the CSI-RS resource 2, and the SRS resources in the SRS resource set 2 correspond to a same power control parameter and a same spatial filtering parameter.

A power control parameter corresponding to one SRS resource may be used by the terminal to determine a transmit power used for sending an SRS on the SRS resource. Optionally, the terminal may determine, based on the following formula (1), the transmit power $p_{SRS}$ used for sending the SRS.

$$p_{SRS} = p_{O\_SRS} + 10\log_{10}(2^{\mu} \times M_{SRS}) + \alpha_{SRS} \times PL \text{ , Formula (1).}$$

The three parameters $p_{O\_SRS}$, $\alpha_{SRS}$, and $PL$ correspond to a basic open-loop operating point. The network device may configure the three parameters, and the terminal may determine, based on the three parameters, the power value for sending the SRS. The three parameters are the foregoing public parameters. $10\log_{10}(2^{\mu} \times M_{SRS})$ represents an offset bandwidth factor, and is determined based on a transmit bandwidth of the SRS.

Further, as shown in FIG. 5B, the network device 1 determines, based on a CSI-RS received on the CSI-RS resource 1, a precoding scheme used for sending an SRS on each SRS resource in the SRS resource set 1. The network device 2 determines, based on a CSI-RS received on the CSI-RS resource 2, a precoding scheme used for sending an SRS on each SRS resource in the SRS resource set 2.

It can be learned that currently, one SRS resource is associated with one CSI-RS resource. The terminal determines, based on a CSI-RS carried on each of a plurality of CSI-RS resources, a precoding scheme for an SRS resource corresponding to the CSI-RS resource. In addition, the terminal sends, based on the determined precoding scheme, an SRS on the SRS resource corresponding to the CSI-RS resource. Mutual influence of CSI-RSs carried on the plurality of CSI-RS resources is not comprehensively considered. Consequently, there is a problem that the determined precoding scheme is not optimal and transmission performance is relatively low because the mutual influence of the CSI-RSs carried on the plurality of CSI-RS resources is not comprehensively considered.

It should be noted that, in FIG. 2A to FIG. 5B, one petal-shaped part may represent one antenna beam.

The following describes some implementations of the present invention in detail with reference to the accompanying drawings. In a case of no conflict, the following embodiments and features in the embodiments may be mutually combined.

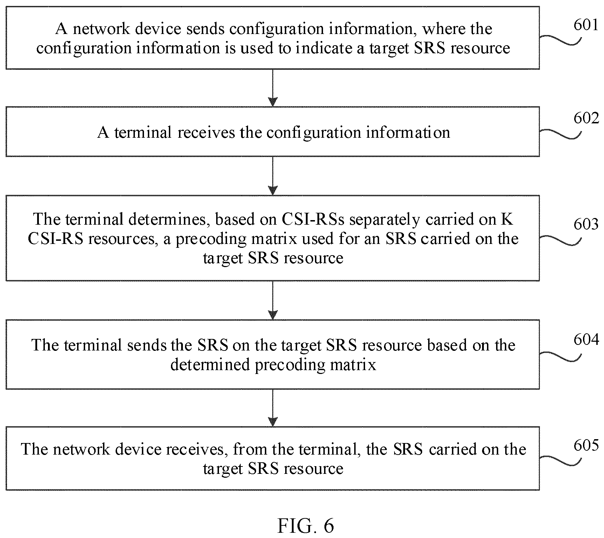

FIG. 6 is a schematic flowchart of an information receiving method and an information sending method according to an embodiment of this application. As shown in FIG. 6, the method in this embodiment may include the following steps.

Step 601: A network device sends configuration information, where the configuration information is used to indicate a target SRS resource.

In this step, the target SRS resource is associated with K CSI-RS resources, and K is an integer greater than 1. The K CSI-RS resources are used by a terminal to determine a precoding scheme used for an SRS carried on the target SRS resource. Optionally, K may be less than or equal to the quantity of network devices in the application scenario shown in FIG. 1. When K is equal to the quantity of network devices in the application scenario shown in FIG. 1, it may indicate that different CSI-RS resources correspond to different network devices in the application scenario. When K is greater than the quantity of network devices in the application scenario shown in FIG. 1, it may indicate that a plurality of CSI-RS resources correspond to different antenna groups of one network device in the application scenario. Optionally, when there are a plurality of network devices in FIG. 1, at least one of all the network devices sends the configuration information. Optionally, the network device may send the configuration information through radio resource control (radio resource control, RRC) signaling or a media access control control element (medium access control-control element, MAC-CE).

Optionally, the configuration information may be specifically used to indicate a quantity of ports, a time domain position, a frequency domain position, and a codeword that are of the target SRS resource.

Optionally, based on a time domain characteristic, the target SRS resource may be periodic and aperiodic in time domain. When the target SRS resource is periodic in time domain, the configuration information may include a time unit-based period and a time unit-based offset. After the network device configures the target SRS resource, the terminal may send the SRS on the target SRS resource in a time unit of a specific period indicated by the time unit-based period and the time unit-based offset. When the target SRS resource is aperiodic in time domain, the configuration information may not include a time unit-based period or a time unit-based offset. After configuring the target SRS resource, the network device may send DCI in a time unit, where the DCI may be used to indicate to trigger the target SRS resource. The terminal may use the time unit in which the DCI is located as a reference and send the SRS on the target SRS resource based on a preconfigured time unit offset. For example, if the DCI is in a time unit n and the preconfigured time unit offset is k, the terminal sends the SRS on target SRS resource in a time unit n+k. Optionally, the target SRS resource may include one or more SRS resources. When the target SRS resource includes a plurality of SRS resources, it may indicate that all the plurality of SRS resources are associated with same K CSI-RS resources. Herein, when there are a plurality of network devices in FIG. 1, the plurality of SRS resources may correspond to all the network devices. Further optionally, the plurality of SRS resources may be in a one-to-one correspondence with all the network devices. Optionally, any one of all the network devices may send, to the terminal, the configuration information used to indicate the target SRS resource. Alternatively, each network device in all the network devices sends, to the terminal, configuration information used to indicate some SRS resources in the target SRS resource, and the terminal may obtain, by combining configuration information sent by all the network devices, the configuration information used to indicate the target SRS resource.

Optionally, the target SRS resource may correspond to K transmission parameters. Further optionally, the transmission parameters may include a power control parameter, a spatial filtering parameter, and the like. Power control parameter: Based on different channel characteristics (for example, path losses and/or signal-to-noise ratios) corresponding to different transmission links, different SRS transmit powers may be configured (for example, when a path loss is relatively high or a signal-to-noise ratio is relatively low, a relatively high transmit power is usually used; on the contrary, when a path loss is relatively low or a signal-to-noise ratio is relatively high, a relatively low transmit power is usually used). Spatial filtering parameter: An optimal pair of receive and transmit beams is determined through a beam training process for each transmission link, and directions of the receive and transmit beams are spatially aligned, to ensure reception performance. Herein, the target SRS resource corresponds to the K transmission parameters. Therefore, after determining a precoding scheme of an SRS, the terminal may determine, in the K transmission parameters, a transmission parameter matching the precoding scheme (where the transmission parameter matching the precoding scheme may be understood as a transmission parameter that can ensure SRS transmission performance), to perform SRS sending. In this way, the SRS transmission performance is ensured.

Further optionally, the K transmission parameters are in a one-to-one correspondence with the K CSI-RS resources. Herein, the K transmission parameters are in the one-to-one correspondence with the K CSI-RS resources. Therefore, after determining a precoding scheme of an SRS based on the K CSI-RS resources, the terminal may use a transmission parameter corresponding to a CSI-RS resource corresponding to the precoding scheme as a transmission parameter matching the precoding scheme, to perform SRS sending. In this way, the SRS transmission performance is ensured. It should be noted that the K transmission parameters corresponding to the target SRS resource may be configured by using the configuration information, or may be configured by using other information 1 than the configuration information. This is not limited in this application. The configuration information or the other information may be indicated through, for example, RRC signaling or MAC-CE, or indicated through RRC signaling in combination with a MAC-CE. For example, the configuration information is indicated through the RRC signaling in combination with the MAC-CE. Specifically, a configuration information set including the configuration information may be indicated through the RRC signaling, and then the configuration information is selected from the configuration information set by using the MAC-CE.

It should be noted that an association relationship between the target SRS resource and the K CSI-RS resources may be configured by using the configuration information, or may be configured by using other information 2 than the configuration information. This is not limited in this application. Herein, for a specific manner used by the network device to indicate the configuration information and the other information 2, refer to the foregoing description. Details are not described herein again. The other information 2 and the other information 1 may be same information, or may be different information. This is not limited in this application.

Optionally, the configuration information may specifically indicate an SRS resource set, where the SRS resource set includes N SRS resources, the N SRS resources include the target SRS resource, the N SRS resources are associated with M CSI-RS resources, and the M CSI-RS resources include the K CSI-RS resources. N is a positive integer, and M is a positive integer less than or equal to K. It should be noted that each SRS resource that is in the N SRS resources and that is other than the target SRS resource may be associated with one or more CSI-RS resources. Herein, the target SRS resource belongs to the SRS resource set, so that the network device can manage, in a set, the target SRS resource. This improves flexibility of managing the target SRS resource and reduces complexity of indicating by using the configuration information.

Further optionally, when M is equal to K, and all the N SRS resources are target SRS resources, a specific manner of configuring an association relationship between the N SRS resources and the M CSI-RS resources may be as follows: A base station indicates an association between the M CSI-RS resources and the SRS resource set through signaling, where the association indicates that each SRS resource in the SRS resource set is associated with the M CSI-RS resources. Alternatively, a base station indicates, through signaling, an association between each of the N SRS resources and a CSI-RS resource in the M CSI-RS resources.

Further optionally, that the configuration information is used to indicate a target SRS resource specifically includes: The configuration information is used to indicate the SRS resource set.

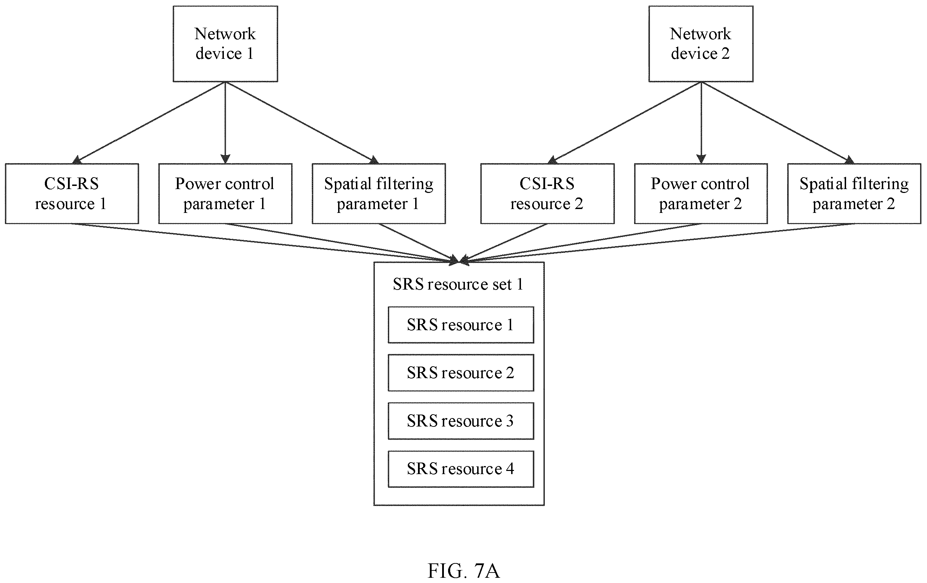

Further optionally, K is equal to M, and each SRS resource in the SRS resource set is associated with the K CSI-RS resources. Herein, K is equal to M, and each SRS resource in the SRS resource set is associated with the K CSI-RS resources, so that each SRS resource in the SRS resource set is associated with the same K CSI-RS resources. For example, it is assumed that there are two network devices, namely, a network device 1 and a network device 2, in the application scenario shown in FIG. 1, and each network device corresponds to one CSI-RS resource. In this case, as shown in FIG. 7A, an SRS resource set 1 jointly configured by the network device 1 and the network device 2 may include an SRS resource 1 to an SRS resource 4. The SRS resource set 1 may be associated with a CSI-RS resource 1 used by the network device 1 to send a CSI-RS to the terminal and a CSI-RS resource 2 used by the network device 2 to send a CSI-RS to the terminal. In addition, the CSI-RS resource 1 may correspond to a power control parameter 1 and a spatial filtering parameter 1, and the CSI-RS resource 2 may correspond to a power control parameter 2 and a spatial filtering parameter 2.

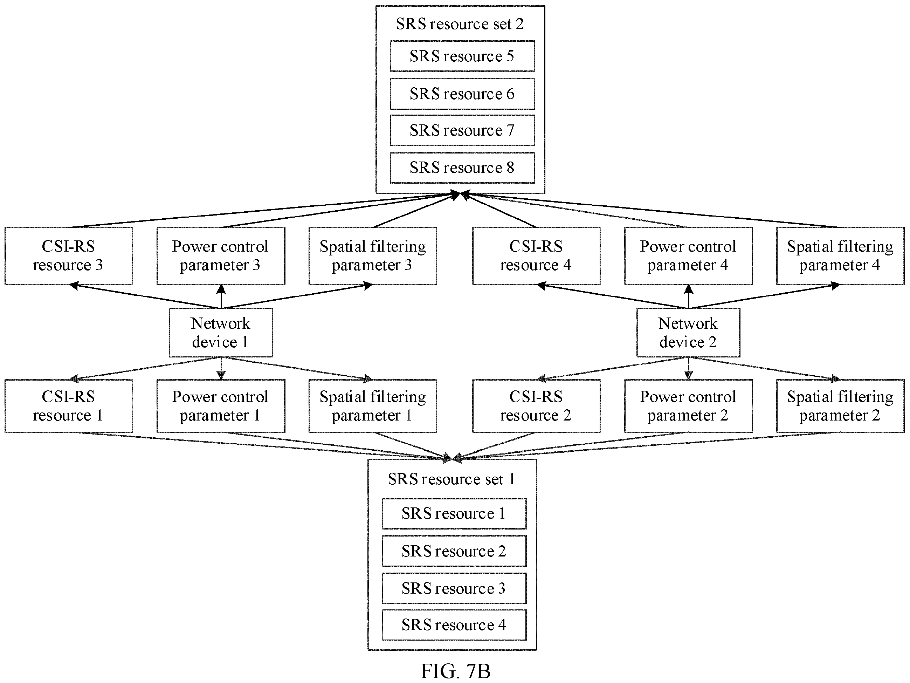

It should be noted that there may be one or more SRS resource sets. For example, it is assumed that there are two network devices, namely, a network device 1 and a network device 2, in an application scenario shown in FIG. 2, and each network device corresponds to one CSI-RS resource. In this case, as shown in FIG. 7B, an SRS resource set 1 and an SRS resource set 2 are jointly configured by the network device 1 and the network device 2. The SRS resource set 1 may include an SRS resource 1 to an SRS resource 4. The SRS resource set 1 may be associated with a CSI-RS resource 1 used by the network device 1 to send a CSI-RS to the terminal and a CSI-RS resource 2 used by the network device 2 to send a CSI-RS to the terminal. In addition, the CSI-RS resource 1 may correspond to a power control parameter 1 and a spatial filtering parameter 1, and the CSI-RS resource 2 may correspond to a power control parameter 2 and a spatial filtering parameter 2. The SRS resource set 2 may include an SRS resource 5 to an SRS resource 8. The SRS resource set 2 may be associated with a CSI-RS resource 3 used by the network device 1 to send a CSI-RS to the terminal and a CSI-RS resource 4 used by the network device 2 to send a CSI-RS to the terminal. In addition, the CSI-RS resource 3 may correspond to a power control parameter 3 and a spatial filtering parameter 3, and the CSI-RS resource 4 may correspond to a power control parameter 4 and a spatial filtering parameter 4. Optionally, when the K CSI-RS resources correspond to a plurality of network devices, a correspondence between the network devices and the CSI-RS resources may be represented by receive beam indication information in configuration information of the CSI-RS resources, and the receive beam indication information is used to indicate a receive beam used by the terminal to receive the CSI-RSs. Because different network devices have different physical locations and channel conditions, corresponding optimal receive and transmit beams are different when different network devices communicate with the terminal, and receive beam indication information in configuration information of different CSI-RS resources is different. This indicates that different CSI-RS resources correspond to different network devices. Optionally, quasi-co-location (quasi-co-location, QCL) information may be used to represent the receive beam indication information.

Step 602: The terminal receives the configuration information.

In this step, specifically, the terminal may receive the configuration information from the network device. For specific content of the configuration information, refer to a related description in step 601. Details are not described herein again.

Step 603: The terminal determines, based on CSI-RSs separately carried on the K CSI-RS resources, the precoding scheme used for the SRS carried on the target SRS resource.

In this step, when determining the precoding scheme used for the SRS carried on the target SRS resource, the terminal may assume that the CSI-RSs separately carried on the K CSI-RS resources are measured. Herein, the terminal determines, based on the CSI-RSs separately carried on the K CSI-RS resources, the precoding scheme used for the SRS carried on the target SRS resource. In this way, the terminal comprehensively considers mutual influence of CSI-RSs carried on a plurality of CSI-RS resources, to determine the precoding scheme used for the SRS carried on the target SRS resource, so that a precoding scheme that enables better transmission performance can be selected, to improve transmission performance.

Specifically, first, the terminal may determine a plurality of covariance matrices based on the CSI-RSs separately carried on the K CSI-RS resources. Then, the terminal may determine a plurality of precoding schemes based on the plurality of determined covariance matrices (for example, may extract an eigenvector through singular value decomposition (singular value decomposition, SVD) to obtain a precoding scheme). Then, based on channel state parameters (for example, equivalent signal to interference plus noise ratios (signal to interference plus noise ratio, SINR) and/or equivalent signal-to-noise ratios (signal noise ratio, SNR) and/or equivalent throughputs (throughput)) corresponding to the plurality of precoding schemes, a precoding scheme with a best channel state is determined in the plurality of precoding schemes. The covariance matrices may include a channel covariance matrix, or a channel covariance matrix and an interference covariance matrix.

Herein, the precoding scheme with the best channel state is the precoding scheme that is used for the SRS carried on the target SRS resource and that is determined by the terminal based on the CSI-RSs separately carried on the K CSI-RS resources.

Optionally, the terminal may determine the plurality of covariance matrices in any one of the following three manners. In a first manner, the terminal may determine K groups of first covariance matrices based on channel measurement information represented by a CSI-RS carried on a first CSI-RS resource in the K CSI-RS resources and interference information represented by a CSI-RS carried on another CSI-RS resource that is other than the first CSI-RS resource and that is in the K CSI-RS resources. The first CSI-RS resource traverses the K CSI-RS resources, and each of the K groups of first covariance matrices includes one channel covariance matrix and K-1 interference covariance matrices. In a second manner, the terminal may determine K groups of second covariance matrices based on channel measurement information represented by a CSI-RS carried on a first CSI-RS resource in the K CSI-RS resources. The first CSI-RS resource traverses the K CSI-RS resources, and each of the K groups of second covariance matrices includes one channel covariance matrix.

In a third manner, the terminal may determine K groups of first covariance matrices based on channel measurement information represented by a CSI-RS carried on a first CSI-RS resource in the K CSI-RS resources and interference information represented by a CSI-RS carried on another CSI-RS resource that is other than the first CSI-RS resource and that is in the K CSI-RS resources, where each of the K groups of first covariance matrices includes one channel covariance matrix and K-1 interference covariance matrices; the terminal may determine K groups of second covariance matrices based on the channel measurement information represented by the CSI-RS carried on the first CSI-RS resource in the K CSI-RS resources, where each of the K groups of second covariance matrices includes one channel covariance matrix. The first CSI-RS resource traverses the K CSI-RS resources.

Optionally, the network device may indicate, through a configuration, the terminal to determine the plurality of covariance matrices in one of the first to the third manners.

It can be learned that, based on the plurality of covariance matrices determined by the terminal in any one of the first to the third manners, the finally determined precoding scheme with the best channel state is either a precoding scheme determined in the following determining manner 1 or a precoding scheme determined in the following determining manner 2.

Determining manner 1:

The precoding scheme used for the SRS carried on the target SRS resource is determined based on channel measurement information represented by a CSI-RS carried on a first target resource and interference information represented by a CSI-RS carried on a second target resource, where the first target resource is one of the K CSI-RS resources, and the second target resource is all CSI-RS resources in the K CSI-RS resources other than the first target resource.

Determining manner 2:

The precoding scheme used for the SRS carried on the target SRS resource is determined based on channel measurement information represented by a CSI-RS carried on a third target resource, where the third target resource is one of the K CSI-RS resources.

That the terminal may determine K groups of first covariance matrices based on channel measurement information represented by a CSI-RS carried on a first CSI-RS resource in the K CSI-RS resources and interference information represented by a CSI-RS carried on another CSI-RS resource that is other than the first CSI-RS resource and that is in the K CSI-RS resources may specifically include: first, determining one channel covariance matrix and K-1 interference covariance matrices (that is, a group of first covariance matrices) based on channel measurement information represented by a CSI-RS carried on a $k_1^{th}$ CSI-RS resource in the K CSI-RS resources and interference information represented by CSI-RSs carried on a $k_2^{th}$ CSI-RS resource to a $k_K^{th}$ CSI-RS resource; then, determining one channel covariance matrix and K-1 interference covariance matrices (that is, a group of first covariance matrices) based on channel measurement information represented by a CSI-RS carried on the $k_2^{th}$ CSI-RS resource in the K CSI-RS resources and interference information represented by CSI-RSs carried on the $k_1^{th}$ CSI-RS resource and a $k_3^{th}$ CSI-RS resource to a $k_K^{th}$ CSI-RS resource; then, determining one channel covariance matrix and K-1 interference covariance matrices (that is, a group of first covariance matrices) based on channel measurement information represented by a CSI-RS carried on a $k_3^{th}$ CSI-RS resource in the K CSI-RS resources and interference information represented by CSI-RSs carried on the $k_1^{th}$ CSI-RS resource, the $k_2^{th}$ CSI-RS resource, and a $k_4^{th}$ CSI-RS resource to a $k_K^{th}$ CSI-RS resource; ...; until the K groups of first covariance matrices are determined.

That the terminal may determine K groups of second covariance matrices based on the channel measurement information represented by the CSI-RS carried on the first CSI-RS resource in the K CSI-RS resources may specifically include:

first, determining a group of second covariance matrices based on channel measurement information represented by a CSI-RS carried on a $k_1$th CSI-RS resource in the K CSI-RS resources; then, determining a group of second covariance matrices based on channel measurement information represented by a CSI-RS carried on a $k_2$th CSI-RS resource in the K CSI-RS resources; then, determining a group of second covariance matrices based on channel measurement information represented by a CSI-RS carried on the $k_3$th CSI-RS resource in the K CSI-RS resources; ...; until the K groups of second covariance matrices are determined.

Further optionally, that the terminal determines the precoding scheme with the best channel state based on the K groups of first covariance matrices that are determined in the first manner may specifically include the following steps: Step 11: All port allocation manners of allocating ports of the target SRS resource to a plurality of network devices are traversed based on the K groups of first covariance matrices, to determine precoding schemes for each group of first covariance matrices in each of all the port allocation manners of.

Step 12: In all precoding schemes determined in step 11, the precoding scheme with the best channel state is determined based on a channel state parameter corresponding to each precoding scheme in all the precoding schemes. It should be noted that, because the precoding schemes are determined based on the first covariance matrices in step 11, the precoding scheme with the best channel state determined in step 12 also corresponds to one first covariance matrix. Therefore, a CSI-RS resource carrying a CSI-RS used to determine a channel covariance matrix in the first covariance matrix is the first target resource, and a CSI-RS resource carrying a CSI-RS used to determine an interference covariance matrix in the first covariance matrix is the second target resource.

Further optionally, that the terminal determines the precoding scheme with the best channel state based on the K groups of second covariance matrices that are determined in the second manner may specifically include the following steps:

Step 13: All port allocation manners of allocating ports of the target SRS resource to a single network device are traversed based on the K group of second covariance matrices, to determine precoding schemes for each group of second covariance matrices in each of all the port allocation manners.

Step 14: In all precoding schemes determined in step 13, the precoding scheme with the best channel state is determined based on a channel state parameter corresponding to each precoding scheme in all the precoding schemes. It should be noted that, because the precoding schemes are determined based on the second covariance matrices in step 13, the precoding scheme with the best channel state determined in step 14 also corresponds to one second covariance matrix. Therefore, a CSI-RS resource carrying a CSI-RS used to determine the second covariance matrix (that is, a channel covariance matrix) is the third target resource.

Further optionally, that the terminal determines the precoding scheme with the best channel state based on the K groups of first covariance matrices and the K groups of second covariance matrices that are determined in the third manner may specifically include the following steps:

Step 15: All port allocation manners (which may be denoted as a port allocation manner 1 below) for sending an SRS to a plurality of network devices by the terminal based on the target SRS resource are traversed based on the K group of first covariance matrices, to determine precoding schemes for each group of first covariance matrices in each of all the port allocation manners.

Step 16: All port allocation manners (which may be denoted as a port allocation manner 2 below) for sending an SRS to a single network device by the terminal based on the target SRS resource are traversed based on the K groups of second covariance matrices, to determine precoding schemes for each group of second covariance matrices in each of all the port allocation manners.

Step 17: In all precoding schemes determined in step 15 and step 16, the precoding scheme with the best channel state is determined based on a channel state parameter corresponding to each precoding scheme in all the precoding schemes. It should be noted that, because the precoding schemes are determined based on the first covariance matrices in step 15, and the precoding schemes are determined based on the second covariance matrices in step 16, the precoding scheme with the best channel state determined in step 17 also corresponds to one first covariance matrix or one second covariance matrix. Therefore, when the precoding scheme with the best channel state corresponds to one first covariance matrix, a CSI-RS resource carrying a CSI-RS used to determine a channel covariance matrix in the first covariance matrix is the first target resource, and a CSI-RS resource carrying a CSI-RS used to determine an interference covariance matrix in the first covariance matrix is the second target resource. When the precoding scheme with the best channel state corresponds to one second covariance matrix, a CSI-RS resource carrying a CSI-RS used to determine the second covariance matrix (that is, a channel covariance matrix) is the third target resource.

In the following description, an example is used in which K is equal to 2, two CSI-RS resources are a CSI-RS resource 1 and a CSI-RS resource 2, the CSI-RS resource 1 is a CSI-RS resource of a network device 1, the CSI-RS resource 2 is a CSI-RS resource of a network device 2, a CSI-RS 1 is carried on the CSI-RS resource 1, a CSI-RS 2 is carried on the CSI-RS resource 2, the plurality of covariance matrices are determined in the third manner, and a maximum quantity of ports is 4.

Because the maximum quantity of ports is 4, all the port quantity allocation manners in the port allocation manner 1 may specifically include: {network device 1: 1; network device 2: 1}, {network device 1: 2; network device 2: 1}, {network device 1: 3; network device 2: 1}, {network device 1: 1; network device 2: 2}, {network device 1: 1; network device 2: 3}, and {network device 1: 2, network device 2: 2}. {Network device 1: 1; network device 2: 1} may indicate that there are two ports used to send the SRS on the target SRS resource, and one of the two ports corresponds to the network device 1. {Network device 1: 2; network device 2:1} may indicate that there are three ports used to send the SRS on the target SRS resource, two ports in the three ports correspond to the network device 1, and the other port in the three ports corresponds to the network device 2. {Network device 1: 3; network device 2: 1} may indicate that there are four ports used to send the SRS on the target SRS resource, three ports in the four ports correspond to the network device 1, and the other port in the four ports corresponds to the network device 2. {Network device 1: 1; the network device 2: 2} may indicate that there are three ports used to send the SRS on the target SRS resource, one of the three ports corresponds to the network device 1, and the other two ports in the three ports correspond to the network device 2. {Network device 1: 1; the network device 2:3} may indicate that there are four ports used to send the SRS on the target SRS resource, one of the four ports corresponds to the network device 1, and the other three ports in the four ports correspond to the network device 2. {Network device 1: 2; the network device 2: 2} may indicate that there are four ports used to send the SRS on the target SRS resource, two ports in the four ports correspond to the network device 1, and the other two ports in the four ports correspond to the network device 2.

Because the maximum quantity of ports is 4, all the port quantity allocation manners in the port allocation manner 2 may specifically include: {network device 1: 0; network device 2: 1}, {network device 1: 0; network device 2: 2}, {network device 1: 0; network device 2: 3}, {network device 1: 0; network device 2: 4}, {network device 1: 1; network device 2: 0}, {network device 1: 2; network device 2: 0}, {network device 1: 3; network device 2: 0}, and {network device 1: 4; network device 2: 0}. It should be noted that, for a specific description of the port quantity allocation manners in the port allocation manner 2, refer to the specific description of the port quantity allocation manners in the port allocation manner 1. Details are not described herein again.

Specifically, the terminal may determine, based on a channel covariance matrix obtained based on the CSI-RS 1 and an interference covariance matrix obtained based on the CSI-RS 2, precoding schemes for ports that are used to send the SRS to the network device 1 based on the target SRS resource in all the port quantity allocation manners in the port allocation manner 1. In addition, the terminal may determine, based on a channel covariance matrix obtained based on the CSI-RS 2 and an interference covariance matrix obtained based on the CSI-RS 1, precoding schemes for ports that are used to send the SRS to the network device 2 based on the target SRS resource in all the port quantity allocation manners in the port allocation manner 1. For example, a port quantity allocation manner is {network device 1: 1; network device 2: 1}. A precoding scheme for one port of the network device 1 may be determined based on the channel covariance matrix obtained based on the CSI-RS 1 and the interference covariance matrix obtained based on the CSI-RS 2. A precoding scheme for one port of the network device 2 may be determined based on the channel covariance matrix obtained based on the CSI-RS 2 and the interference covariance matrix obtained based on the CSI-RS 1.

Optionally, the network device may further indicate, through a configuration, the terminal to use one or more port allocation manners in all the port quantity allocation manners in the port allocation manner 1. Alternatively, the terminal may determine, based on a channel covariance matrix obtained based on the CSI-RS 1 and an interference covariance matrix obtained based on the CSI-RS 2, precoding schemes for ports used to send the SRS to the network device 1 based on the target SRS resource in the port quantity allocation manners that are indicated by the network device and that are in the port allocation manner 1. In addition, the terminal may determine, based on a channel covariance matrix obtained based on the CSI-RS 2 and an interference covariance matrix obtained based on the CSI-RS 1, precoding schemes for ports used to send the SRS to the network device 2 based on the target SRS resource in all the port quantity allocation manners that are indicated by the network device and that are in the port allocation manner 1. Herein, the network device further indicates, through a configuration, the terminal to use one or more port allocation manners in all the port quantity allocation manners in the port allocation manner 1, so that operation complexity of calculating an SRS precoding scheme by the terminal can be reduced.

Further, the terminal may determine, based on the channel covariance matrix obtained based on the CSI-RS 1, precoding schemes for ports that are used to send the SRS to the network device 1 based on the target SRS resource in all the port quantity allocation manners in the port allocation manner 2. In addition, the terminal may determine, based on the channel covariance matrix obtained based on the CSI-RS 2, precoding schemes for ports that are used to send the SRS to the network device 2 based on the target SRS resource in all the port quantity allocation manners in the port allocation manner 2. For example, a port quantity allocation manner is {network device 1: 0; network device 2: 1}. No port is allocated to the network device 1, and a precoding matrix of one port of the network device 2 may be determined based on the channel covariance matrix obtained based on the CSI-RS 2.

Optionally, the network device may further indicate, through a configuration, the terminal to use one or more port allocation manners in all the port quantity allocation manners in the port allocation manner 2. Alternatively, the terminal may determine, based on a channel covariance matrix obtained based on the CSI-RS 1, precoding schemes for ports used to send the SRS to the network device 1 based on the target SRS resource in the port quantity allocation manners that are indicated by the network device and that are in the port allocation manner 2. In addition, the terminal may determine, based on a channel covariance matrix obtained based on the CSI-RS 2, precoding schemes for ports used to send the SRS to the network device 2 based on the target SRS resource in the port quantity allocation manners that are indicated by the network device and that are in the port allocation manner 2. Herein, the network device further indicates, through a configuration, the terminal to use one or more port allocation manners in all the port quantity allocation manners in the port allocation manner 2, so that operation complexity of calculating an SRS precoding scheme by the terminal can be reduced.

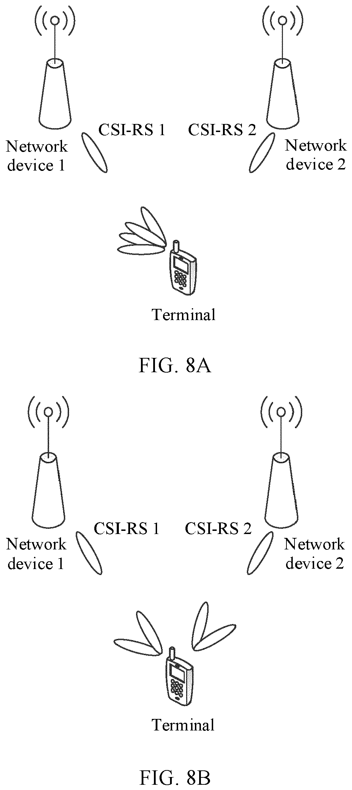

Finally, the terminal may compare channel state parameters corresponding to all precoding schemes, to determine a corresponding precoding scheme with a best channel state. For example, it is assumed that a precoding matrix with a port quantity allocation manner of {network device 1: 4, network device 2: 0} of the precoding scheme with the best channel state is determined. In this case, the terminal sends the SRS on the target SRS resource based on the precoding scheme 3 with a best channel state. Details may be shown in FIG. 8A. For example, it is assumed that a port quantity allocation manner of {network device 1: 2, network device 2: 2} of a precoding scheme with a best channel state is determined. In this case, the terminal sends the SRS on the target SRS resource based on a precoding scheme with a best channel state. Details may be shown in FIG. 8B.

Optionally, when the target SRS resource includes a plurality of SRS resources, manners of determining precoding schemes used for SRSs carried on all of the plurality of SRS resources may be the same. Further optionally, the precoding scheme used for the SRS carried on each of the plurality of SRS resources is determined based on the foregoing determining manner 1 or determining manner 2. Herein, because a used transmission manner (for example, transmission with only the network device 1 is performed, or transmission with both the network device 1 and the network device 2 is performed) is determined by the terminal in real time based on channel measurement, and the manners of determining the precoding schemes used for the SRSs carried on all of the plurality of SRS resources may be the same, a problem that due to inconsistent manners of determining precoding schemes of SRSs carried on a plurality of SRS resources, the network device cannot determine how to select an SRS resource for uplink data transmission can be avoided.

Step 604: The terminal sends the SRS on the target SRS resource based on the determined precoding scheme.

In this step, when the target SRS resource may correspond to the K transmission parameters, step 603 may specifically include: sending the SRS on the target SRS resource based on the determined precoding scheme and one target transmission parameter in the K transmission parameters. Optionally, the K transmission parameters are in a one-to-one correspondence with the K CSI-RS resources.

Further, because the precoding scheme of the SRS carried on the target SRS resource may be determined based on CSI-RSs carried on a plurality of CSI-RS resources, a precoding scheme determined by the terminal may correspond to a plurality of CSI-RS resources. Therefore, to facilitate the terminal in determining a transmission parameter used to send the SRS on the target SRS resource based on the precoding scheme, optionally, the target transmission parameter may be a transmission parameter corresponding to a target resource in the K CSI-RS resources, where the target resource carries a CSI-RS that represents channel measurement information. Specifically, when the precoding scheme determined by the terminal in step 604 is a precoding scheme finally determined in the determining manner 1, the target resource may be the first target resource. For example, it is assumed that the precoding scheme determined by the terminal in step 604 is determined based on channel measurement information represented by an SRS carried on the SRS resource 1 and interference information represented by an SRS carried on the SRS resource 2, in this case, the SRS resource 1 is the target resource. When the precoding scheme determined by the terminal in step 604 is a precoding scheme finally determined in the determining manner 2, the target resource may be the third target resource. It is assumed that the precoding scheme determined by the terminal in step 604 is determined based on channel measurement information represented by an SRS carried on the SRS resource 2. In this case, the SRS resource 2 is the target resource.

Step 605: The network device receives, from the terminal, the SRS carried on the target SRS resource.

In this step, optionally, when there are a plurality of network devices in FIG. 1, step 605 may be specifically as follows: Each of all the network devices performs decoding on the target SRS resource, to receive the SRS on the target SRS resource. In addition, a target network device in all the network devices may receive, from the terminal, the SRS carried on the target SRS resource. The target network device may correspond to the precoding scheme determined by the terminal in step 603. For example, in FIG. 8A, the target network device may be the network device 1. For another example, in FIG. 8B, target network devices may be the network device 1 and the network device 2. Optionally, when the target SRS resource may be aperiodic in time domain, the network device may trigger, by sending DCI, sending of the SRS on the target SRS resource. Further, the method in this embodiment may further include the following step: The network device sends K pieces of DCI, where the K pieces of DCI are in a one-to-one correspondence with the K CSI-RS resources, and the K pieces of DCI are used to indicate to trigger the terminal to send the SRS on the target SRS resource. Optionally, DCI corresponding to one CSI-RS resource may be sent by a network device corresponding to the CSI-RS resource. Further, when there are a plurality of network devices in FIG. 1, a correspondence between all the network devices and the K CSI-RS resources may include that one network device corresponds to one CSI-RS resource; and/or one network device may correspond to a plurality of CSI-RS resources. Therefore, that the network device sends K pieces of DCI may specifically include: All the network devices send DCI corresponding to CSI-RS resources corresponding to the network devices.

Optionally, the K pieces of DCI are further used to indicate to trigger the terminal to receive CSI-RSs on the corresponding CSI-RS resources. Correspondingly, the network device may send the K pieces of DCI before the network device sends a CSI-RS. In this case, after receiving DCI corresponding to one CSI-RS resource, the terminal may decode a CSI-RS on the CSI-RS resource. Herein, the K pieces of DCI are further used to indicate to trigger the terminal to receive CSI-RSs on the corresponding CSI-RS resources, so that resource overheads caused when the network device indicates, by using other information, to trigger the terminal to receive CSI-RSs on corresponding CSI-RS resources can be prevented.

Alternatively, when the K CSI-RS resources correspond to a plurality of network devices, spatial filtering information separately indicated in the K pieces of DCI may be used to distinguish whether the CSI-RS resources correspond to a same network device. For example, when two CSI-RS resources corresponding to two pieces of DCI correspond to a same network device, beam directions corresponding to spatial filtering information indicated by the two pieces of DCI are the same; or when two CSI-RS resources corresponding to two pieces of DCI correspond to different network devices, beam directions corresponding to spatial filtering information indicated by the two pieces of DCI are different. Correspondingly, the terminal receives the K pieces of DCI.

Optionally, the K pieces of DCI may be carried in a same time unit, or the K pieces of DCI may be carried in different time units. The time unit may represent a time unit for scheduling. Optionally, the time unit may be a slot (slot), an orthogonal frequency division multiplexing (orthogonal frequency division multiplexing, OFDM) symbol set, or the like.

When the target SRS resource is aperiodic in time domain, the network device may send the K pieces of DCI to indicate to trigger the terminal to send the SRS on the target SRS resource. The terminal may use a time unit in which the K pieces of DCI are located as a reference and send the SRS on the target SRS resource based on a preconfigured time unit offset.

When the K pieces of DCI are carried in a same time unit, sending occasions that are for sending the SRS on the target SRS resource and that are determined by using the time unit in which the K pieces of DCI are located as a reference are the same. This may indicate that the terminal needs to send, to network devices corresponding to the K CSI-RS resources, the SRS on the target SRS resource on a same sending occasion. In this case, it may be understood as that the network device allows the terminal to send uplink data to the network device based on a plurality of SRS resources.

Therefore, optionally, when the K pieces of DCI are carried in a same time unit, the terminal may determine a plurality of covariance matrices in the first manner in the foregoing three manners of determining the plurality of covariance matrices. Based on that the terminal determines the plurality of covariance matrices in the foregoing first manner, the precoding scheme with the best channel state determined by the terminal is a precoding matrix determined in the foregoing determining manner 1. Therefore, that the terminal determines, based on CSI-RSs separately carried on the K CSI-RS resources, the precoding scheme used for the SRS carried on the target SRS resource includes: The precoding scheme used for the SRS carried on the target SRS resource is determined based on the channel measurement information represented by the CSI-RS carried on the first target resource and the interference information represented by the CSI-RS carried on the second target resource, where the first target resource is one of the K CSI-RS resources, and the second target resource is all the CSI-RS resources other than the first target resource in the K CSI-RS resources.

When the K pieces of DCI are carried in different time units, sending occasions that are for sending the SRS on the target SRS resource and that are determined by using the time units in which the K pieces of DCI are located as references are different. This may indicate that the terminal needs to send, to network devices respectively corresponding to the K CSI-RS resources, the SRS on the target SRS resource on different sending occasions. In this case, it may be understood as that the network device does not allow the terminal to send uplink data to the network device based on a plurality of SRS resources. Therefore, optionally, when the K pieces of DCI are carried in different time units, the terminal may determine a plurality of covariance matrices in the second manner in the foregoing three manners of determining the plurality of covariance matrices. Based on that the terminal determines the plurality of covariance matrices in the foregoing second manner, the precoding scheme with the best channel state determined by the terminal is a precoding matrix determined in the foregoing determining manner 2. Therefore, that the terminal determines, based on CSI-RSs carried on the K CSI-RS resources, the precoding scheme used for the SRS carried on the target SRS resource includes: The precoding scheme used for the SRS carried on the target SRS resource is determined based on the channel measurement information represented by the CSI-RS carried on the third target resource, where the third target resource is one of the K CSI-RS resources.

In this embodiment, the network device sends the configuration information, where the configuration information is used to indicate the target SRS resource, the target SRS resource is associated with the K CSI-RS resources, and K is an integer greater than 1. The terminal determines, based on the CSI-RSs separately carried on the K CSI-RS resources, the precoding scheme used for the SRS carried on the target SRS resource. The terminal sends the SRS on the target SRS resource based on the determined precoding scheme. In this way, the terminal comprehensively considers mutual influence of CSI-RSs carried on a plurality of CSI-RS resources, to determine the precoding scheme used for the SRS carried on the target SRS resource, so that a precoding scheme that enables better transmission performance can be selected, to improve transmission performance.

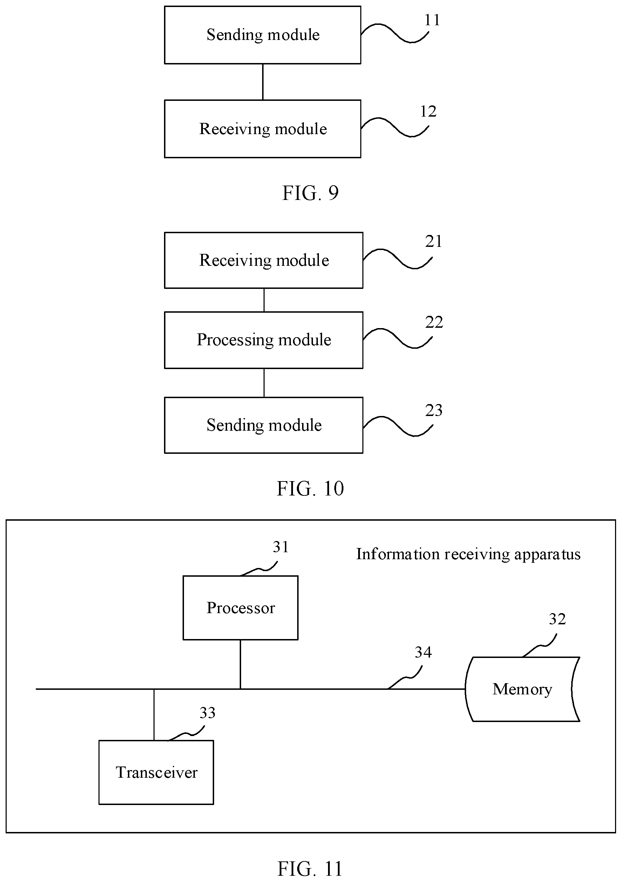

FIG. 9 is a schematic structural diagram of an information receiving apparatus according to an embodiment of this application. The information receiving apparatus in this embodiment may be applied to a network device. The information receiving apparatus may be configured to perform a function of the network device in the method embodiment shown in FIG. 6. As shown in FIG. 9, the information receiving apparatus may include a sending module 11 and a receiving module 12. The sending module 11 is configured to send configuration information, where the configuration information is used to indicate a target sounding reference signal SRS resource, the target SRS resource is associated with K channel state information reference signal CSI-RS resources, K is an integer greater than 1, and the K CSI-RS resources are used to determine a precoding scheme used for an SRS carried on the target SRS resource. The receiving module 12 is configured to receive the SRS carried on the target SRS resource.

In a possible implementation, the precoding scheme used for the SRS carried on the target SRS resource is determined in one of the following two determining manners:

The precoding scheme used for the SRS carried on the target SRS resource is determined based on channel measurement information represented by a CSI-RS carried on a first target resource and interference information represented by a CSI-RS carried on a second target resource. The first target resource is one of the K CSI-RS resources, and the second target resource is all CSI-RS resources in the K CSI-RS resources other than the first target resource. Alternatively, the precoding scheme used for the SRS carried on the target SRS resource is determined based on channel measurement information represented by a CSI-RS carried on a third target resource. The third target resource is one of the K CSI-RS resources.

In a possible implementation, the target SRS resource includes a plurality of SRS resources.

In a possible implementation, the configuration information is further used to indicate K transmission parameters corresponding to the target SRS resource, and the SRS carried on the target SRS resource is sent based on one target transmission parameter in the K transmission parameters.

In a possible implementation, the K transmission parameters are in a one-to-one correspondence with the K CSI-RS resources.

In a possible implementation, the target transmission parameter is a transmission parameter corresponding to a target resource in the K CSI-RS resources, where the target resource carries a CSI-RS that represents channel measurement information.

In a possible implementation, the sending module 11 is further configured to send K pieces of DCI, where the K pieces of DCI are in a one-to-one correspondence with the K CSI-RS resources, and the K pieces of DCI are used to indicate to trigger a terminal to send the SRS on the target SRS resource.

In a possible implementation, the K pieces of DCI are further used to indicate to trigger the terminal to receive CSI-RSs on the corresponding CSI-RS resources.

In a possible implementation, the K pieces of DCI are carried in a same time unit.

The precoding scheme used for the SRS carried on the target SRS resource is determined based on the channel measurement information represented by the CSI-RS carried on the first target resource and the interference information represented by the CSI-RS carried on the second target resource. The first target resource is one of the K CSI-RS resources, and the second target resource is all the CSI-RS resources other than the first target resource in the K CSI-RS resources.

In a possible implementation, the K pieces of DCI are carried in different time units.

The precoding scheme used for the SRS carried on the target SRS resource is determined based on the channel measurement information represented by the CSI-RS carried on the third target resource. The third target resource is one of the K CSI-RS resources.

In a possible implementation, the configuration information is specifically used to indicate an SRS resource set. The SRS resource set includes N SRS resources, where the N SRS resources include the target SRS resource, the N SRS resources are associated with M CSI-RS resources, and the M CSI-RS resources include the K CSI-RS resources. N is a positive integer, and M is a positive integer less than or equal to K.

In a possible implementation, K is equal to M, and each SRS resource in the SRS resource set is associated with the K CSI-RS resources.

The information receiving apparatus according to this embodiment of this application may perform an action of the network device in the foregoing method embodiment. Implementation principles and technical effects thereof are similar, and details are not described herein again.

FIG. 10 is a schematic structural diagram of an information sending apparatus according to an embodiment of this application. The information sending apparatus in this embodiment may be applied to a terminal. The information sending apparatus may be configured to perform a function of the terminal in the method embodiment shown in FIG. 6. As shown in FIG. 10, the information sending apparatus may include a receiving module 21, a processing module 22, and a sending module 23. The receiving module 21 is configured to receive configuration information, where the configuration information is used to indicate a target sounding reference signal SRS resource, the target SRS resource is associated with K channel state information reference signal CSI-RS resources, K is an integer greater than 1, and the K CSI-RS resources are used by the terminal to determine a precoding scheme used for an SRS carried on the target SRS resource.

The processing module 22 is configured to determine, based on CSI-RSs separately carried on the K CSI-RS resources, the precoding scheme used for the SRS carried on the target SRS resource.

The sending module 23 is configured to send the SRS on the target SRS resource based on the determined precoding scheme.

In a possible implementation, the precoding scheme used for the SRS carried on the target SRS resource is determined based on the CSI-RSs separately carried on the K CSI-RS resources in one of the following two determining manners: The precoding scheme used for the SRS carried on the target SRS resource is determined based on channel measurement information represented by a CSI-RS carried on a first target resource and interference information represented by a CSI-RS carried on a second target resource. The first target resource is one of the K CSI-RS resources, and the second target resource is all CSI-RS resources in the K CSI-RS resources other than the first target resource. Alternatively, the precoding scheme used for the SRS carried on the target SRS resource is determined based on channel measurement information represented by a CSI-RS carried on a third target resource. The third target resource is one of the K CSI-RS resources.

In a possible implementation, the target SRS resource includes a plurality of SRS resources.

In a possible implementation, the configuration information is further used to indicate K transmission parameters corresponding to the target SRS resource.

The sending module 23 is specifically configured to send the SRS on the target SRS resource based on the determined precoding scheme and one target transmission parameter in the K transmission parameters.

In a possible implementation, the K transmission parameters are in a one-to-one correspondence with the K CSI-RS resources.

In a possible implementation, the target transmission parameter is a transmission parameter corresponding to a target resource in the K CSI-RS resources, where the target resource carries a CSI-RS that represents channel measurement information.

In a possible implementation, the receiving module 21 is further configured to receive K pieces of DCI, where the K pieces of DCI are in a one-to-one correspondence with the K CSI-RS resources, and the K pieces of DCI are used to indicate to trigger the terminal to send the SRS on the target SRS resource.

In a possible implementation, the K pieces of DCI are further used to indicate to trigger the terminal to receive CSI-RSs on the corresponding CSI-RS resources.

In a possible implementation, the K pieces of DCI are carried in a same time unit.

That the precoding scheme used for the SRS carried on the target SRS resource is determined based on the CSI-RSs separately carried on the K CSI-RS resources includes: The precoding scheme used for the SRS carried on the target SRS resource is determined based on the channel measurement information represented by the CSI-RS carried on the first target resource and the interference information represented by the CSI-RS carried on the second target resource. The first target resource is one of the K CSI-RS resources, and the second target resource is all the CSI-RS resources other than the first target resource in the K CSI-RS resources.

In a possible implementation, the K pieces of DCI are carried in different time units.

The precoding scheme used for the SRS carried on the target SRS resource is determined, based on the CSI-RSs carried on the K CSI-RS resources includes:

The precoding scheme used for the SRS carried on the target SRS resource is determined based on the channel measurement information represented by the CSI-RS carried on the third target resource. The third target resource is one of the K CSI-RS resources.

In a possible implementation, the configuration information is specifically used to indicate an SRS resource set, where the SRS resource set includes N SRS resources, the N SRS resources include the target SRS resource, the N SRS resources are associated with M CSI-RS resources, and the M CSI-RS resources include the K CSI-RS resources.

N is a positive integer, and M is a positive integer less than or equal to K.

In a possible implementation, K is equal to M, and each SRS resource in the SRS resource set is associated with the K CSI-RS resources.

The information sending apparatus according to this embodiment of this application may perform an action of the terminal in the foregoing method embodiment. Implementation principles and technical effects thereof are similar, and details are not described herein again.

It should be noted that, the foregoing receiving module and sending module may be a transceiver in actual implementation. The processing module may be implemented in a form of software invoked by a processing element, or may be implemented in a form of hardware. For example, the processing module may be a separately disposed processing element, or may be integrated into a chip of the foregoing apparatus for implementation. In addition, the processing module may alternatively be stored in a memory of the foregoing apparatus in a form of program code, and is invoked by a processing element of the foregoing apparatus to perform a function of the processing module. In addition, all or some of the modules may be integrated together, or may be implemented independently. The processing element described herein may be an integrated circuit with a signal processing capability. In an implementation process, the steps in the method or the modules can be implemented by using a hardware integrated logic circuit in the processing element, or by using an instruction in a form of software.

For example, the foregoing modules may be configured as one or more integrated circuits for implementing the foregoing method, such as one or more application-specific integrated circuits (application specific integrated circuit, ASIC), one or more microprocessors (digital signal processor, DSP), or one or more field programmable gate arrays (field programmable gate array, FPGA). For another example, when one of the foregoing modules is implemented in a form of scheduling program code by a processing element, the processing element may be a general-purpose processor, for example, a central processing unit (central processing unit, CPU) or another processor that can invoke the program code. For another example, the modules may be integrated together and implemented in a form of a system-on-a-chip (system-on-a-chip, SOC).

FIG. 11 is a schematic structural diagram of an information receiving apparatus according to an embodiment of this application. As shown in FIG. 11, the information receiving apparatus may include a processor 31 (for example, a CPU), a memory 32, and a transceiver 33. The transceiver 33 is coupled to the processor 31, and the processor 31 controls receiving and sending actions of the transceiver 33. The memory 32 may include a high-speed random access memory (random-access memory, RAM), and may further include a non-volatile memory (non-volatile memory, NVM), for example, at least one magnetic disk memory. The memory 32 may store various instructions, to complete various processing functions and implement steps of the method in this application. For example, the information receiving apparatus in this application may further include a communications bus 34. The transceiver 33 may be integrated into a transceiver of the information receiving apparatus, or may be independent transceiver antennas on the information receiving apparatus. The communications bus 34 is configured to implement communication connection between elements.

In this embodiment of this application, the memory 32 is configured to store computer-executable program code, and the program code includes an instruction. When the processor 31 executes the instruction, the instruction enables the processor 31 of the information receiving apparatus to perform a processing action of the network device in the foregoing embodiments or the optional embodiments, and enables the transceiver 33 to perform receiving and sending actions of the network device in the foregoing method embodiment. Implementation principles and technical effects thereof are similar, and details are not described herein again.

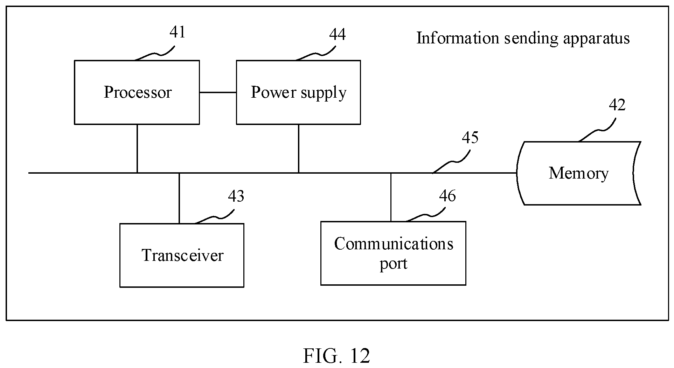

FIG. 12 is a schematic structural diagram of an information sending apparatus according to an embodiment of this application. As shown in FIG. 12, the information sending apparatus may include a processor 41 (for example, a CPU), a memory 42, and a transceiver 43. The transceiver 43 is coupled to the processor 41, and the processor 41 controls a receiving and sending action of the transceiver 43. The memory 42 may include a high-speed random access memory (random-access memory, RAM), and may further include a non-volatile memory (non-volatile memory, NVM), for example, at least one magnetic disk memory. The memory 42 may store various instructions, to complete various processing functions and implement steps of the method in this application. For example, the information sending apparatus in this application may further include a power supply 44, a communications bus 45, and a telecommunication port 46. The transceiver 43 may be integrated into a transceiver of the information sending apparatus, or may be independent transceiver antennas on the information sending apparatus. The communications bus 45 is configured to implement communication connection between elements. The telecommunication port 46 is configured to implement connection and communication between the information sending apparatus and another peripheral.

In this embodiment of this application, the memory 42 is configured to store computer-executable program code, and the program code includes an instruction. When the processor 41 executes the instruction, the instruction enables the processor 41 of the information sending apparatus to perform a processing action of the terminal in the foregoing method embodiment, and enables the transceiver 43 to perform receiving and sending actions of the terminal in the foregoing method embodiment or the optional embodiments. Implementation principles and technical effects thereof are similar, and details are not described herein again.

All or some of the foregoing embodiments may be implemented by software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedures or functions according to the embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid state disk, (SSD)), or the like.

"A plurality of" in this application refers to two or more than two. The term "and/or" in this specification describes only an association relationship for describing associated objects and represents that there may be three relationships. For example, A and/or B may represent three cases: There is only A, there are both A and B, and there is only B. In addition, the character "/" in this specification usually indicates an "or" relationship between associated objects. In a formula, the character "/" indicates a "division" relationship between associated objects.

**Claims**

1. An information receiving method, applied to a network device, wherein the method comprises:

   sending, by the network device, configuration information, wherein the configuration information is used to indicate a target sounding reference signal ,SRS resource, the target SRS resource is associated with K channel state information reference signal CSI-RS resources, K is an integer greater than 1, and the K CSI-RS resources are used to determine, by a terminal, a precoding scheme used for an SRS carried on the target SRS resource; and
   receiving, by the network device, the SRS carried on the target SRS resource.

2. The method according to claim 1, wherein the precoding scheme used for the SRS carried on the target SRS resource is determined in one of the following two determining manners:

   determining, based on channel measurement information represented by a CSI-RS carried on a first target resource and interference information represented by a CSI-RS carried on a second target resource, the precoding scheme used for the SRS carried on the target SRS resource, wherein the first target resource is one of the K CSI-RS resources, and the second target resource is all CSI-RS resources in the K CSI-RS resources other than the first target resource; or
   determining, based on channel measurement information represented by a CSI-RS carried on a third target resource, the precoding scheme used for the SRS carried on the target SRS resource, wherein the third target resource is one of the K CSI-RS resources.

3. The method according to claim 1 or 2, wherein the target SRS resource comprises a plurality of SRS resources.

4. The method according to any one of claims 1 to 3, wherein the configuration information is further used to indicate K transmission parameters corresponding to the target SRS resource, and the SRS carried on the target SRS resource is sent based on one target transmission parameter in the K transmission parameters.

5. The method according to claim 4, wherein the K transmission parameters are in a one-to-one correspondence with the K CSI-RS resources.

6. The method according to claim 4 or 5, wherein the target transmission parameter is a transmission parameter corresponding to a target resource in the K CSI-RS resources, wherein the target resource carries a CSI-RS that represents channel measurement information.

7. An information sending method, applied to a terminal, wherein the method comprises:

receiving, by the terminal, configuration information, wherein the configuration information is used to indicate a target sounding reference signal, SRS resource, the target SRS resource is associated with K channel state information reference signal CSI-RS resources, K is an integer greater than 1;
determining, by the terminal, based on CSI-RSs separately carried on the K CSI-RS resources, the precoding scheme used for the SRS carried on the target SRS resource; and
sending, by the terminal, the SRS on the target SRS resource based on the determined precoding scheme.

8. The method according to claim 7, wherein the determining, based on CSI-RSs separately carried on the K CSI-RS resources, the precoding scheme used for the SRS carried on the target SRS resource comprises one of the following two determining manners:

determining, based on channel measurement information represented by a CSI-RS carried on a first target resource and interference information represented by a CSI-RS carried on a second target resource, the precoding scheme used for the SRS carried on the target SRS resource, wherein the first target resource is one of the K CSI-RS resources, and the second target resource is all CSI-RS resources in the K CSI-RS resources other than the first target resource; or
determining, based on channel measurement information represented by a CSI-RS carried on a third target resource, the precoding scheme used for the SRS carried on the target SRS resource, wherein the third target resource is one of the K CSI-RS resources.

9. The method according to claim 7 or 8, wherein the target SRS resource comprises a plurality of SRS resources.

10. The method according to any one of claims 7 to 9, wherein the configuration information is further used to indicate K transmission parameters corresponding to the target SRS resource, and
the sending the SRS on the target SRS resource based on the determined precoding scheme comprises:
sending the SRS on the target SRS resource based on the determined precoding scheme and one target transmission parameter in the K transmission parameters.

11. The method according to claim 10, wherein the K transmission parameters are in a one-to-one correspondence with the K CSI-RS resources.

12. The method according to claim 10 or 11, wherein the target transmission parameter is a transmission parameter corresponding to a target resource in the K CSI-RS resources, wherein the target resource carries a CSI-RS that represents channel measurement information.

13. A communication apparatus, wherein the communication apparatus is configured to perform the method according to any one of claims 1 to 6.

14. A communication apparatus, wherein the communication apparatus is configured to perform the method according to any one of claims 7 to 12.

15. A computer program comprising instructions, wherein when executed by a communications apparatus, the instructions cause the communications apparatus to perform the method according to any one of claims 1 to 6 or to perform the method according to any one of claims 7 to 12.

**Patentansprüche**

1. Informationsempfangsverfahren, das auf einem Netzwerkgerät Anwendung findet, wobei das Verfahren umfasst:

Senden von Konfigurationsinformationen durch das Netzwerkgerät, wobei die Konfigurationsinformationen dafür verwendet werden, eine Ziel-"Sounding Reference Signal"-Ressource (SRS-Ressource) anzugeben, die Ziel-SRS-Ressource K Kanalzustandsinformationsreferenzsignal(CSI-RS, "channel state information reference signal")-Ressourcen zugeordnet ist, K eine ganze Zahl größer als 1 ist und die K CSI-RS-Ressourcen dafür verwendet werden, durch ein Endgerät ein Vorcodierungsschema zu bestimmen, das für ein auf der Ziel-SRS-Ressource geführtes SRS verwendet wird, und

Empfangen des auf der Ziel-SRS-Ressource geführten SRS durch das Netzwerkgerät.

2. Verfahren nach Anspruch 1, wobei das Vorcodierungsschema, das für das auf der Ziel-SRS-Ressource geführte SRS verwendet wird, gemäß einer der folgenden zwei Bestimmungsarten bestimmt wird:

Bestimmen des Vorcodierungsschemas, das für das auf der Ziel-SRS-Ressource geführte SRS verwendet wird, auf Grundlage von Kanalmessungsinformationen, die durch ein auf einer ersten Zielressource geführtes CSI-RS dargestellt werden, und von Interferenzinformationen, die durch ein auf einer zweiten Zielressource geführtes CSI-RS dargestellt werden, wobei die erste Zielressource eine der K CSI-RS-Ressourcen ist und die zweite Zielressource alle CSI-RS-Ressourcen in den K CSI-RS-Ressourcen ist, die nicht die erste Zielressource sind; oder
Bestimmen des Vorcodierungsschemas, das für das auf der Ziel-SRS-Ressource geführte SRS verwendet wird, auf Grundlage von Kanalmessungsinformationen, die durch ein auf einer dritten Zielressource geführtes CSI-RS dargestellt werden, wobei die dritte Zielressource eine der K CSI-RS-Ressourcen ist.

3. Verfahren nach Anspruch 1 oder 2, wobei die Ziel-SRS-Ressource eine Mehrzahl von SRS-Ressourcen umfasst.

4. Verfahren nach einem der Ansprüche 1 bis 3, wobei die Konfigurationsinformationen ferner dafür verwendet werden, K Übertragungsparameter anzugeben, die der Ziel-SRS-Ressource entsprechen, und das auf der Ziel-SRS-Ressource geführte SRS auf Grundlage eines Ziel-Übertragungsparameters in den K Übertragungsparametern gesendet wird.

5. Verfahren nach Anspruch 4, wobei die K Übertragungsparameter in einer Eins-zu-Eins-Entsprechung zu den K CSI-RS-Ressourcen stehen.

6. Verfahren nach Anspruch 4 oder 5, wobei der Zielübertragungsparameter ein Übertragungsparameter ist, der einer Zielressource in den K CSI-RS-Ressourcen entspricht, wobei die Zielressource ein CSI-RS führt, das Kanalmessungsinformationen darstellt.

7. Informationssendeverfahren, das auf einem Endgerät Anwendung findet, wobei das Verfahren umfasst:

Empfangen von Konfigurationsinformationen durch das Endgerät, wobei die Konfigurationsinformationen dafür verwendet werden, eine Ziel-"Sounding Reference Signal"-Ressource (SRS-Ressource) anzugeben, die Ziel-SRS-Ressource K Kanalzustandsinformationsreferenzsignal(CSI-RS)-Ressourcen zugeordnet ist und K eine ganze Zahl größer als 1 ist;
Bestimmen des Vorcodierungsschemas, das für das auf der Ziel-SRS-Ressource geführte SRS verwendet wird, durch das Endgerät auf Grundlage von CSI-RS, die auf den K CSI-RS-Ressourcen separat geführt werden, und
Senden des SRS auf der Ziel-SRS-Ressource durch das Endgerät auf Grundlage des bestimmten Vorcodierungsschemas.

8. Verfahren nach Anspruch 7, wobei das Bestimmen des Vorcodierungsschemas, das für das auf der Ziel-SRS-Ressource geführte SRS verwendet wird, auf Grundlage von CSI-RS, die auf den K CSI-RS-Ressourcen separat geführt werden, eine der folgenden zwei Bestimmungsarten umfasst:

Bestimmen des Vorcodierungsschemas, das für das auf der Ziel-SRS-Ressource geführte SRS verwendet wird, auf Grundlage von Kanalmessungsinformationen, die durch ein auf einer ersten Zielressource geführtes CSI-RS dargestellt werden, und von Interferenzinformationen, die durch ein auf einer zweiten Zielressource geführtes CSI-RS dargestellt werden, wobei die erste Zielressource eine der K CSI-RS-Ressourcen ist und die zweite Zielressource alle CSI-RS-Ressourcen in den K CSI-RS-Ressourcen ist, die nicht die erste Zielressource sind; oder
Bestimmen des Vorcodierungsschemas, das für das auf der Ziel-SRS-Ressource geführte SRS verwendet wird, auf Grundlage von Kanalmessungsinformationen, die durch ein auf einer dritten Zielressource geführtes CSI-RS dargestellt werden, wobei die dritte Zielressource eine der K CSI-RS-Ressourcen ist.

9. Verfahren nach Anspruch 7 oder 8, wobei die Ziel-SRS-Ressource eine Mehrzahl von SRS-Ressourcen umfasst.

10. Verfahren nach einem der Ansprüche 7 bis 9, wobei die Konfigurationsinformationen ferner dafür verwendet werden, K Übertragungsparameter anzugeben, die der Ziel-SRS-Ressource entsprechen, und
das Senden des SRS auf der Ziel-SRS-Ressource auf Grundlage des bestimmten Vorcodierungsschemas umfasst: Senden des SRS auf der Ziel-SRS-Ressource auf Grundlage des bestimmten Vorcodierungsschemas und eines Zielübertragungsparameters in den K Übertragungsparametern.

11. Verfahren nach Anspruch 10, wobei die K Übertragungsparameter in einer Eins-zu-Eins-Entsprechung zu den K CSI-RS-Ressourcen stehen.

12. Verfahren nach Anspruch 10 oder 11, wobei der Zielübertragungsparameter ein Übertragungsparameter ist, der einer Zielressource in den K CSI-RS-Ressourcen entspricht, wobei die Zielressource ein CSI-RS führt, das Kanalmessungsinformationen darstellt.

13. Kommunikationsvorrichtung, wobei die Kommunikationsvorrichtung dazu ausgelegt ist, das Verfahren nach einem der Ansprüche 1 bis 6 durchzuführen.

14. Kommunikationsvorrichtung, wobei die Kommunikationsvorrichtung dazu ausgelegt ist, das Verfahren nach einem der Ansprüche 7 bis 12 durchzuführen.

15. Computerprogramm, das Anweisungen aufweist, wobei die Anweisungen bei Ausführung durch eine Kommunikationsvorrichtung bewirken, dass die Kommunikationsvorrichtung das Verfahren nach einem der Ansprüche 1 bis 6 durchführt oder das Verfahren nach einem der Ansprüche 7 bis 12 durchführt.

**Revendications**

1. Procédé de réception d'informations, appliqué à un dispositif de réseau, le procédé comprenant les étapes consistant à :

    envoyer, par le dispositif de réseau, des informations de configuration, les informations de configuration étant utilisées pour indiquer une ressource de signal de référence de sondage (SRS) cible, la ressource SRS cible étant associée à K ressources de signal de référence d'informations d'état de canal (CSI-RS), K étant un nombre entier supérieur à 1, et les K ressources CSI-RS étant utilisées pour déterminer, par un terminal, un schéma de précodage utilisé pour un SRS transporté sur la ressource SRS cible ; et
    recevoir, par le dispositif de réseau, le SRS transporté sur la ressource SRS cible.

2. Procédé selon la revendication 1, dans lequel le schéma de précodage utilisé pour le SRS transporté sur la ressource SRS cible est déterminé selon l'une des deux manières de détermination suivantes consistant à :

    déterminer, sur la base d'informations de mesure de canal représentées par un CSI-RS transporté sur une première ressource cible et d'informations de brouillage représentées par un CSI-RS transporté sur une deuxième ressource cible, le schéma de précodage utilisé pour le SRS transporté sur la ressource SRS cible, la première ressource cible étant une des K ressources CSI-RS, et la deuxième ressource cible étant toutes les ressources CSI-RS autres que la première ressource cible parmi les K ressources CSI-RS ; ou
    déterminer, sur la base d'informations de mesure de canal représentées par un CSI-RS transporté sur une troisième ressource cible, le schéma de précodage utilisé pour le SRS transporté sur la ressource SRS cible, la troisième ressource cible étant une des K ressources CSI-RS.

3. Procédé selon la revendication 1 ou 2, dans lequel la ressource SRS cible comprend une pluralité de ressources SRS.

4. Procédé selon l'une quelconque des revendications 1 à 3, dans lequel les informations de configuration sont en outre utilisées pour indiquer K paramètres de transmission correspondant à la ressource SRS cible, et le SRS transporté sur la ressource SRS cible est envoyé sur la base d'un paramètre de transmission cible parmi les K paramètres de transmission.

5. Procédé selon la revendication 4, dans lequel les K paramètres de transmission sont en correspondance biunivoque avec les K ressources CSI-RS.

6. Procédé selon la revendication 4 ou 5, dans lequel le paramètre de transmission cible est un paramètre de transmission correspondant à une ressource cible parmi les K ressources CSI-RS, la ressource cible transportant un CSI-RS qui représente des informations de mesure de canal.

7. Procédé d'envoi d'informations, appliqué à un terminal, le procédé comprenant les étapes consistant à :

recevoir, par le terminal, des informations de configuration, les informations de configuration étant utilisées pour indiquer une ressource de signal de référence de sondage (SRS) cible, la ressource SRS cible étant associée à K ressources de signal de référence d'information d'état de canal (CSI-RS), K étant un nombre entier supérieur à 1 ;
déterminer, par le terminal, sur la base de CSI-RS transportés séparément sur les K ressources CSI-RS, le schéma de précodage utilisé pour le SRS transporté sur la ressource SRS cible ; et
envoyer, par le terminal, le SRS sur la ressource SRS cible sur la base du schéma de précodage déterminé.

8. Procédé selon la revendication 7, dans lequel la détermination, sur la base de CSI-RS transportés séparément sur les K ressources CSI-RS, du schéma de précodage utilisé pour le SRS transporté sur la ressource SRS cible comprend l'une des deux manières de détermination suivantes consistant à :

déterminer, sur la base d'informations de mesure de canal représentées par un CSI-RS transporté sur une première ressource cible et d'informations de brouillage représentées par un CSI-RS transporté sur une deuxième ressource cible, le schéma de précodage utilisé pour le SRS transporté sur la ressource SRS cible, la première ressource cible étant une des K ressources CSI-RS, et la deuxième ressource cible étant toutes les ressources CSI-RS autres que la première ressource cible parmi les K ressources CSI-RS ; ou
déterminer, sur la base d'informations de mesure de canal représentées par un CSI-RS transporté sur une troisième ressource cible, le schéma de précodage utilisé pour le SRS transporté sur la ressource SRS cible, la troisième ressource cible étant une des K ressources CSI-RS.

9. Procédé selon la revendication 7 ou 8, dans lequel la ressource SRS cible comprend une pluralité de ressources SRS.

10. Procédé selon l'une quelconque des revendications 7 à 9, dans lequel les informations de configuration sont en outre utilisées pour indiquer K paramètres de transmission correspondant à la ressource SRS cible, et l'envoi du SRS sur la ressource SRS cible sur la base du schéma de précodage déterminé comprend l'étape consistant à :
envoyer le SRS sur la ressource SRS cible sur la base du schéma de précodage déterminé et d'un paramètre de transmission cible parmi les K paramètres de transmission.

11. Procédé selon la revendication 10, dans lequel les K paramètres de transmission sont en correspondance biunivoque avec les K ressources CSI-RS.

12. Procédé selon la revendication 10 ou 11, dans lequel le paramètre de transmission cible est un paramètre de transmission correspondant à une ressource cible parmi les K ressources CSI-RS, la ressource cible transportant un CSI-RS qui représente des informations de mesure de canal.

13. Appareil de communication, l'appareil de communication étant configuré pour réaliser le procédé selon l'une quelconque des revendications 1 à 6.

14. Appareil de communication, l'appareil de communication étant configuré pour réaliser le procédé selon l'une quelconque des revendications 7 à 12.

15. Programme informatique comprenant des instructions qui, lorsqu'elles sont exécutées par un appareil de communication, amènent l'appareil de communication à réaliser le procédé selon l'une quelconque des revendications 1 à 6 ou à réaliser le procédé selon l'une quelconque des revendications 7 à 12.

FIG. 1

FIG. 2A

FIG. 2B

FIG. 2C

FIG. 3A

FIG. 3B

Network
device 1

Network
device 2

CSI-RS
(CSI-RS resource 1)

CSI-RS
(CSI-RS resource 2)

FIG. 4A

SRS

SRS

Network
device 1

Network
device 2

1 2 3 4 5 6 7 8

(SRS resource 1)

(SRS resource 2)

Terminal

FIG. 4B

FIG. 5A

FIG. 5B

A network device sends configuration information, where the configuration information is used to indicate a target SRS resource ⟍ 601

A terminal receives the configuration information ⟍ 602

The terminal determines, based on CSI-RSs separately carried on K CSI-RS resources, a precoding matrix used for an SRS carried on the target SRS resource ⟍ 603

The terminal sends the SRS on the target SRS resource based on the determined precoding matrix ⟍ 604

The network device receives, from the terminal, the SRS carried on the target SRS resource ⟍ 605

FIG. 6

FIG. 7A

SRS resource set 2

SRS resource 5

SRS resource 6

SRS resource 7

SRS resource 8

| CSI-RS resource 3 | Power control parameter 3 | Spatial filtering parameter 3 | CSI-RS resource 4 | Power control parameter 4 | Spatial filtering parameter 4 |

Network device 1

Network device 2

| CSI-RS resource 1 | Power control parameter 1 | Spatial filtering parameter 1 | CSI-RS resource 2 | Power control parameter 2 | Spatial filtering parameter 2 |

SRS resource set 1

SRS resource 1

SRS resource 2

SRS resource 3

SRS resource 4

FIG. 7B

FIG. 8A

FIG. 8B

**EP 3 860 091 B1**

FIG. 9

FIG. 10

FIG. 11

34

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018048366 A1